# EUROPEAN PATENT SPECIFICATION

(11) **EP 3 526 279 B1**
(45) Date of publication and mention of the grant of the patent: **05.08.2020**
(21) Application number: 17781522.2
(22) Date of filing: 16.10.2017
(51) Int. Cl.: C08G 77/58, C09D 183/14, C08G 77/14, C09D 183/04

(54) **A HYBRID SOL-GEL CORROSION-RESISTANT COATING COMPOSITION**
HYBRIDE KORROSIONSBESTÄNDIGE SOL-GEL-BESCHICHTUNGSZUSAMMENSETZUNG
COMPOSITION DE REVÊTEMENT RÉSISTANT À LA CORROSION SOL-GEL HYBRIDE

(30) Priority: 17.10.2016 EP 16382471; 28.10.2016 EP 16382496
(43) Date of publication of application: 21.08.2019
(73) Proprietor: Fundación Tecnalia Research & Innovation, 20009 Donostia-San Sebastian, Guipuzcoa (ES)
(72) Inventor: AGUSTIN SAENZ, Cecilia, 20009 Donostia - San Sebastián (ES); SANTA COLOMA MOZO, Patricia, 20009 Donostia - San Sebastián (ES); MARTIN UGARTE, Eider, 20009 Donostia - San Sebastián (ES); BRIZUELA PARRA, Marta, 20009 Donostia - San Sebastián (ES)
(74) Representative: ZBM Patents - Zea, Barlocci & Markvardsen
(86) International application number: PCT/EP2017/076375
(87) International publication number: WO 2018/073186

(56) References cited:
- WO-A1-2015/001461
- ES-A1- 2 334 542
- US-A1- 2008 213 598
- VARMA P C R ET AL: "Effect of organic chelates on the performance of hybrid sol-gel coated AA 2024-T3 aluminium alloys", PROGRESS IN ORGANIC COATINGS, ELSEVIER BV, NL, vol. 66, no. 4, 15 October 2009 (2009-10-15), pages 406-411, XP026703886, ISSN: 0300-9440, DOI: 10.1016/J.PORGCOAT.2009.09.004 [retrieved on 2009-10-23]
- PLINIO INNOCENZI ET AL: "New Synthetic Route to (3-Glycidoxypropyl)trimethoxysilane-Based Hybrid Organic-Inorganic Materials", CHEMISTRY OF MATERIALS, vol. 11, no. 7, 30 June 1999 (1999-06-30), pages 1672-1679, XP055353503, US ISSN: 0897-4756, DOI: 10.1021/cm980734z

## Description

This application claims the benefit of the European Patent Applications EP16382471.7 filed on 17th October 2016 and EP16382496.4 filed on 28th October 2016.

The present invention relates to sol-gel coating composition, particularly to organic-inorganic hybrid silica-metal oxide based sol-gel coating composition useful for coating having corrosion resistant properties. The present invention also relates to a process for the preparation of the hybrid sol-gel coating, and coated substrates containing it.

### BACKGROUND ART

Metals, such as iron, aluminium, copper and magnesium and their alloys are extensively used in structural applications such as for example marine, aircraft sectors and cultural heritage. While these metals are useful because of their physical characteristics, such as stiffness and high strength to weight ratios, they are highly susceptible to corrosion in aggressive environments.

A generic way to protect metals from corrosion is to apply protective films or coatings, which also permits the desired properties of the substrate through the modification of the surface. Two appropriate defence strategies to reduce the corrosive attack can be envisaged: the passive corrosion protection and the active corrosion protection. The passive protection is normally provided by a barrier film that prevents contact of corrosive species with the metal surface and therefore hinders a corrosion process, while active protection refers to the ability to protect the exposed metal surface when defects in the barrier film occur by employing inhibitive species that can decrease corrosion activity.

Chromate conversion coatings have been used as treatment onto metals for a long time to enhance their resistance to localized corrosion and to increase paint adhesion. However, the use of chromates is very restricted and will be totally banned because of their carcinogenic activity. In recent years, siloxane based sol-gel derived coatings have been proven to be a viable alternative to chromates. They possess good barrier properties because of formation of dense Si-O-Si network. In addition the adhesion between the alloy surface and sol-gel treatment is also substantial due to the formation of Metal-O-Si bonds and assure good adhesion of the organic paint system to the metal substrate.

Therefore, the inorganic oxide coatings can provide good protection on metal substrates, but there are still some major drawbacks of these coatings, from the standpoint of corrosion resistant layers. Some of the drawbacks are the following: (i) the oxide films are brittle; (ii) coating cracking is likely to occur during thermal treatment required for sintering the coating due to the differences in thermal expansion coefficient of coating material with a variety of substrates, like metals; (iii) thicker coatings having more than 500 nm are difficult to achieve; and (iv) relatively high temperatures (such as 400°C and 600 °C) are often required to obtain appropriate degree of densification.

Furthermore, wide variety of metal protection systems usually comprises more complicated protection systems, and sol-gel treatment usually should be further coated with primers, paints or top-coats having different chemical compositions. Therefore, this intermediate layer between surface and paints, plays an important role since it should increase adhesion between the metal surface and organic coatings, and also provide an additional barrier and, if possible, active corrosion protective properties.

To overcome the limitation of pure inorganic sol-gel coatings, such as brittleness, low thickness and high temperature treatment, much work has been done to introduce organic component into the inorganic sol-gel to form the organic-inorganic hybrid sol-gel coatings. Thus, it has been disclosed in the state of the art that the introduction of an organic component leads to the formation of thicker, more flexible and functionalized films with enhanced compatibility to different organic top-coatings.

Nevertheless, the above mentioned sol-gel coatings can provide only passive corrosion protection. Defects or pores presented in the sol-gel coating allow the corrosion species to penetrate toward the metal surface and initiate the corrosion processes. In this case, when defects or pores are formed in the barrier layer, the coating cannot stop corrosion in this point. Thus, an additional active corrosion protection is needed in this case to suppress the activity in the defect by the introduction of active corrosion protection, which employs inhibitive species that can decrease corrosion activity. Consequently both strategies (passive protection and active protection) should be used together to adequately protect the metallic substrate.

Some of the corrosion inhibitors disclosed in the state of the art as alternative for Cr⁶⁺ compounds are inorganic compounds, for instance phosphates, vanadates, borates, cerium and molybdenum components that have positive influence in protecting metal alloys, such as aluminium alloys. One of the compounds most studied as corrosion inhibitor embedded in sol-gel matrixes is Ce, which can be incorporated in form of nanoparticles of CeO₂ or in form of various salts of Ce³⁺ or Ce⁴⁺ to protect several metal surfaces such as aluminium alloys, magnesium, galvanised steel, steel and tin among others. In particular, the corrosion protection of Ce³⁺ ions trapped in the network of sol-gel coating has an inhibitory and self-healing effects probably due to precipitation of Ce(OH)₃ and CeO₂ in the vicinity of the points of corrosion by increasing pH in that area, and this process can be repeated until the anodic corrosion is inactivated.

As it was mentioned above one of the most common way of adding cerium is in form of salt, for example cerium nitrate (Ce(NO₃)₃) or cerium chloride (CeCl₃). However, the incorporation of these species, such as chloride, in the coatings can have an adverse effect on corrosion due to the release of Cl⁻ ions and the subsequent formation of pitting on metallic substrates. Furthermore, some of the above mentioned inhibitive species of inorganic nature can destabilize the sol-gel coating unless low concentration is incorporated in the matrix, thus providing only a short-term of self-healing effect. Therefore, the study of inhibitive species of organic nature was begun.

Several organic species have been considered as excellent corrosion inhibitors. Examples of these compounds disclosed in the state of the art are acetylenic alcohols, triazole, triazole derivatives (such as benzotriazole), and 8-hydroxyquinoline. However, the introduction of these organic corrosion inhibitors still have some of the drawbacks mentioned above for the inorganic species such as the destabilisation of the resultant sol-gel coating and the consequent reduction of corrosion protection. WO2015001461 discloses curable hybrid sol-gel composition for improving corrosion resistance of a substrate, comprises sols comprising hydrolysable silicon alkoxide, silicon alkoxide, hydrolysable metal oxide, and (meth)acrylic acid-functional component.

Therefore, from what is known in the art it is derived that there is still the need of providing a sol-gel coating having enhanced metal corrosion resistance by improving both passive and active protection performance.

### SUMMARY OF THE INVENTION

Inventors have found a specific hybrid inorganic-organic sol-gel coating composition having an enhanced passive corrosion protection. In particular, the composition of the invention allows the preparation of sol-gel coating having the optimal thickness and appropriate surface morphology for reducing corrosion velocity and therefore, enhance the resistance to corrosion of a wide range of substrates commonly used. The sol-gel corrosion resistant coatings of the invention are obtainable by a sol-gel process which comprises mixing a first sol being prepared from a mixture of at least one hydrolysable silicon alkoxide and at least one silicon-organic alkoxide having at least one non-hydrolysable substituent bonded to the silicon atom being the non-hydrolysable substituent other than a substituted or un-substituted (C₁-C₄)alkyl; at least one organic precursor; and optionally at least one epoxy-ring opening catalyst; with a second sol being prepared from a mixture of at least one hydrolysable metal alkoxide, and a complexion agent.

Particularly, inventors have found a specific hybrid inorganic-organic sol-gel coating composed by interlocked networks of silica and a metal oxide, such as zirconia, produced by sol-gel synthesis of corresponding alkoxide, and organic phase coming from a silicon-organic alkoxide with non-hydrolysable group that reacts with an organic precursor and thus, the polymeric phase is chemically bonded to Si atom and entrapped in the hybrid network.

Furthermore, inventors have also found that the use of the sol-gel coating composition of the invention for coating a substrate have an improved adhesion capability. It means that the sol-gel coating has excellent adhesion onto a variety of substrates, so as to permits an exceptional adhesion between the sol-gel coating on the substrate and the most commonly used primers, paints and top-coats that overcoat the sol-gel corrosion protection coatings.

Thus, a first aspect of the present invention relates to a process for preparing a sol-gel coating composition comprising a process for preparing a sol-gel coating composition comprising: a) providing a first sol obtainable by a process which comprises: a1) first mixing at least one hydrolysable silicon alkoxide and at least one silicon-organic alkoxide having at least one non-hydrolysable substituent bonded to the silicon atom being the non-hydrolysable substituent other than a substituted or un-substituted (C₁-C₄)alkyl with one or more C₁-C₈ alcohols; a2) preparing a second mixture by mixing an aqueous solution of at least one acid catalyst having a pH lower than 5, at least one organic precursor, one or more C₁-C₈ alcohols and optionally at least one epoxy-ring opening catalyst; a3) adding the second mixture obtained in step a2) to the resulting mixture of step a1); and stirring the resulting mixture at a temperature comprised from 35°C to 45°C for an appropriate period of time to obtain the first sol; b) providing a second sol obtainable by a process which comprises: b1) first mixing at least one hydrolysable metal alkoxide with one or more C₁-C₈ alcohols under an inert and dry atmosphere; b2) adding a complexion agent to the resultant mixture obtained in step b1); and stirring the resultant mixture for an appropriate period of time; b3) adding an aqueous solution of at least one acid catalyst having a pH lower than 7 to the resulting mixture obtained in step b2) and stirring the resulting mixture at a temperature comprised from 15 °C to 30 °C for an appropriate period of time to obtain the second sol; wherein the metal atom in the hydrolysable metal alkoxide is selected from the group consisting of Ti, Zr, Al, B, Sn and V; and c) mixing the first sol with the second sol, and ageing the resulting mixture by stirring at a temperature comprised from 15°C to 30°C for a period of time comprised from 24h to 72h; wherein the silicon-organic alkoxide having at least one non-hydrolysable substituent bonded to the silicon atom being the non-hydrolysable substituent other than a substituted or un-substituted (C₁-C₄)alkyl is a compound of formula (III)

R⁹-(CH₂)ₘ-Si(OR¹⁰)(OR¹¹)(OR¹²) (III)

wherein by non-hydrolysable substituent bonded to the silicon atom is understood an epoxide alkyl moiety bonded to the silicon atom by a Si-C bond which is non-hydrolysable at this position, and wherein in compound of formula (III) such substituent is R9(CH₂)m-;
and each one of R¹⁰, R¹¹ and R¹² are independently selected from the group consisting of a substituted or un-substituted (C₁-C₁₄)alkyl, (C₅-C₆)aryl, (C₂-C₁₄)alkenyl, and (C₂-C₁₄)alkyl-CH=CH-; m is an integer comprised from 0 to 20; and R⁹ is a compound of formula (V) 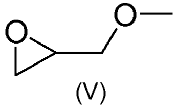
and the organic precursor is selected from the group consisting of a bisphenol compound of formula (VI) 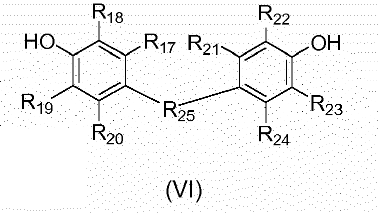
wherein: R₁₇, R₁₈, R₁₉, R₂₀, R₂₁, R₂₂, R₂₃ and R₂₄ are independently selected from the group consisting of H, substituted or un-substituted (C1-C6)alkyl, (C₅-C₆)aryl, (C₂-C₁₄)alkenyl, and (C₂-C₁₄)alkyl-CH=CH- and substituted or un-substituted phenyl; R₂₅ is selected from the group consisting of CR₂₆R₂₇, SO₂, a compound of formula (VII) 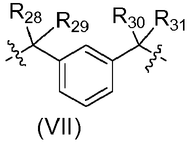
and a compound of formula (VIII) 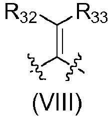
R₂₆ and R₂₇ are independently selected from the group consisting of H, substituted or un-substituted (C₁-C₆)alkyl, (C₅-C₆)aryl, (C₂-C₁₄)alkenyl, (C₂-C₁₄)alkyl-CH=CH-, and substituted or un-substituted phenyl; R₂₈, R₂₉, R₃₀ and R₃₁ are independently selected from the group consisting of H, and substituted or un-substituted (C₁-C₆)alkyl, (C₅-C₆)aryl, (C₂-C₁₄)alkenyl, and (C₂-C₁₄)alkyl-CH=CH-; and R₃₂ and R₃₃ are independently selected from the group consisting of halogen and substituted or un-substituted (C₁-C₆)alkyl, (C₅-C₆)aryl, (C₂-C₁₄)alkenyl, and (C₂-C₁₄)alkyl-CH=CH-; a substituted phenol of formula (IX) 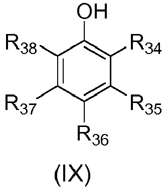
wherein: R₃₄, R₃₅, R₃₆, R₃₇ and R₃₈ are independently selected from the group consisting of a H, substituted or un-substituted (C₁-C₁₄)alkyl, (C₅-C₆)aryl, (C₂-C₁₄)alkenyl, and (C₂-C₁₄)alkyl-CH=CH, being at least one of R₃₄, R₃₅, R₃₆, R₃₇ and R₃₈ other than H;
a compound of formula (X) 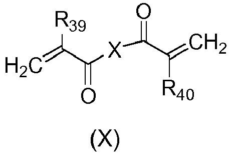 wherein:
   R₃₉ and R₄₀ are independently selected from the group consisting of H and (C₁-C₆)alkyl; and
   X is selected from the group consisting of a compound of formula (XI) 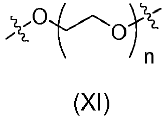
   wherein n is an integer from 1 to 6;
   and a compound of formula (XII); 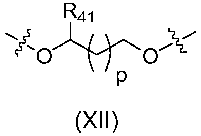
      wherein: R₄₁ is selected from the group consisting of H and (C₁-C₆)alkyl and p is an integer from 1 to 8;
      and mixture thereof.

A second aspect of the present invention relates to a sol-gel coating composition obtainable by the process as defined in the first aspect of the invention.

A third aspect of the present invention relates to a process for preparing a coated substrate comprising: d) depositing the sol-gel coating composition as defined in the second aspect of the invention over the substrate; and e) curing the coating obtained in step d).

Finally, a fourth aspect of the present invention relates to a coated substrate obtainable by the process as defined in the third aspect of the invention.

### BRIEF DESCRIPTION OF THE DRAWINGS

Figure 1 shows the Fourier transform infrared (FTIR) spectrum of the sol-gel coating composition of Example 1 deposited over a KBr plate. The spectrum expresses the transmittance (%) versus wavelength (cm⁻¹).
Figure 2 shows the survey spectrum acquired by X-ray Photoelectron Spectroscopy (XPS) of the sol-gel coating composition of Example 1. The pattern expresses intensity (counts) versus binding energy (eV).

### DETAILED DESCRIPTION OF THE INVENTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

For purposes of the present invention, any ranges given include both the lower and the upper end-points of the range. Ranges given, such as temperatures, times, and the like, should be considered approximate, unless specifically stated.

For the purpose of the invention, the term "sol-gel" or "solution sol-gel" or "SSG" process have the same meaning and are used interchangeable. They refers to a chemical process that are used for the synthesis of single- or multiple-component materials, including glasses, in the form of thin solid films, ultrafine powders, high surface area porous materials, dense abrasive minerals, and continuous ceramic and glass fibres. In particular, a sol-gel coating is prepared by a sol-gel process that involves the preparation of one or more precursor mixtures (also called "sol"), which is converted into intermediate product (also called "gel") and thereof into a specified material by a process that may involve chemical reactions, product forming, gelification, drying, and curing.

The term "sol" refers to either a dispersion of colloidal particles of one phase in a fluid medium or a solution prepared by hydrolysis and polycondensation of metalorganic derivatives compounds or inorganic salts in alcoholic solution. And, the term "gel" refers to a material consisting of a three-dimensional network of a solid phase interwoven with an entrapped and immobilized continuous liquid phase.

The term "alkyl" refers to a saturated straight, or branched hydrocarbon chain which contains the number of carbon atoms specified in the description or claims. Examples include, among others, the group methyl, ethyl, propyl, isopropyl, butyl, isobutyl, sec-butyl, tert-butyl, n-pentyl, and n-hexyl.

The term "(C₂-C₁₄)alkenyl" refers to a saturated straight, or branched alkyl chain which contains from 2 to 14 carbon atoms and that also contains one or more double bonds. Examples include, among others, ethenyl, 1-propen-1-yl, 1-propen-2-yl, 3-propen-1-yl, 1-buten-1-yl, 1-buten-2-yl, 3-buten-1-yl, 3-buten-2-yl, 2-buten-1-yl, 2-buten-2-yl, 2-methyl-1-propen-1-yl, 2-methyl-2-propen-1-yl, 1,3-butadien-1-yl, 1,3-butadien-2-yl, and 2-hexenyl.

The term "(C₂-C₁₄)alkynyl" refers a saturated straight, or branched alkyl chain which contains from 2 to 14 carbon atoms and that also contains one or more triple bonds. Examples include, among others, ethynyl, 1-propynyl, 2-butynyl, 1,3-butadinyl, 4-pentynyl, and 1-hexynyl.

The term "(C₅-C₆)aryl" refers to a 5 to 6 membered ring, saturated, partially or totally unsaturated, optionally bridged or fused to a 5 to 6 membered ring; the members of the rings being independently selected from C, CH, CH₂, O, N, NH, and S; being one or more of the hydrogen atoms of the members optionally substituted by a radical selected from the group consisting of (C₁-C₆)alkyl, (C₁-C₆)haloalkyl, halogen, (C₁-C₆)alkoxy, (C₁-C₆)alkylcarbonyl, (C₁-C₆)alkyloxycarbonyl, nitro and cyano.

The term "halogen" refers to fluorine, chlorine, bromine and iodine.

The term "room temperature" refers to a temperature comprised from 20°C to 25°C.

When values of characteristic peaks of a X-ray photoelectron spectrum are given it is said that these values are those taking into account that the resolution of the measurement is ±0.15 eV. It should be understood that the values are the ones shown in the corresponding lists or tables.

When values of characteristic peaks of a FTIR spectrum are given it is said that these values are "approximated" values. It should be understood that the values are the ones shown in the corresponding lists or tables.

For the purposes of the invention the expressions "obtainable", "obtained" and equivalent expressions are used interchangeably, and in any case, the expression "obtainable" encompasses the expression "obtained".

As mentioned above, an aspect of the present invention refers to a process for preparing a sol-gel coating composition which comprises providing a first sol (step a) obtainable by a process which comprises: a1) first mixing at least one hydrolysable silicon alkoxide and at least one silicon-organic alkoxide having at least one non-hydrolysable substituent bonded to the silicon atom being the non-hydrolysable substituent other than a substituted or un-substituted (C₁-C₄)alkyl with one or more C₁-C₈ alcohols; a2) preparing a second mixture by mixing at least an aqueous solution of at least one acid catalyst, at least one organic precursor, one or more C₁-C₈ alcohols and optionally at least one epoxy-ring opening catalyst; a3) adding the second mixture obtained in step a2) to the resulting mixture of step a1); and stirring the resulting mixture at a temperature comprised from 35°C to 45°C for a period of time to obtain the first sol.

In an embodiment, optionally in combination with one or more features of the various embodiments described above or below, the hydrolysable silicon alkoxide is selected from the group consisting of:
i) a totally hydrolysable silicon alkoxide of formula (I);

   Si(OR¹)(OR²)(OR³)(OR⁴) (I)
ii) an alkylalkoxide having at least one non-hydrolysable substituent being the non-hydrolysable substituent a substituted or un-substituted (C₁-C₄)alkyl of formula (II):

   R⁸-Si(OR⁵)(OR⁶)(OR⁷) (II)
iii) an alkenylalkoxide having at least one non-hydrolysable substituent being the non-hydrolysable substituent a substituted or un-substituted (C₁-C₄)alkyl of formula (II'):

   R^{X}-Si(OR⁵)(OR⁶)(OR⁷) (II')
iv) a mixture of at least a totally hydrolysable silicon alkoxide of formula (I) and at least an alkylalkoxide having at least one non-hydrolysable substituent being the non-hydrolysable substituent a substituted or un-substituted (C₁-C₄)alkyl of formula (II); and v) a mixture of at least a totally hydrolysable silicon alkoxide of formula (I) and at least an alkenylalkoxide having at least one non-hydrolysable substituent being the non-hydrolysable substituent a substituted or un-substituted (C₁-C₄)alkyl of formula (II'); wherein: each one of R¹, R², R³, R⁴, R⁵, R⁶ and R⁷ are independently selected from the group consisting of a substituted or un-substituted (C₁-C₁₄)alkyl, (C₅-C₆)aryl, (C₂-C₁₄)alkenyl and (C₂-C₁₄)alkynyl group; R⁸ is a substituted or un-substituted (C₁-C₄)alkyl; and R^{x} is a substituted or un-substituted (C₂-C₁₄)alkenyl.

In an embodiment, optionally in combination with one or more features of the various embodiments described above or below, the hydrolysable silicon alkoxide is selected from the group consisting of:
i) a totally hydrolysable silicon alkoxide of formula (I);

   Si(OR¹)(OR²)(OR³)(OR⁴) (I)
ii) an alkylalkoxide having at least one non-hydrolysable substituent being the non-hydrolysable substituent a substituted or un-substituted (C₁-C₄)alkyl of formula (II):

   R⁸-Si(OR⁵)(OR⁶)(OR⁷) (II)
and iii) a mixture of at least a totally hydrolysable silicon alkoxide of formula (I) and at least an alkylalkoxide having at least one non-hydrolysable substituent being the non-hydrolysable substituent a substituted or un-substituted (C₁-C₄)alkyl of formula (II); wherein: each one of R¹, R², R³, R⁴, R⁵, R⁶ and R⁷ are independently selected from the group consisting of a substituted or un-substituted (C₁-C₁₄)alkyl, (C₅-C₆)aryl, (C₂-C₁₄)alkenyl and (C₂-C₁₄)alkynyl group; and R⁸ is a substituted or un-substituted (C₁-C₄)alkyl.

In an embodiment, optionally in combination with one or more features of the various embodiments described above or below, the hydrolysable silicon alkoxide is a totally hydrolysable silicon alkoxide of formula (I);

Si(OR¹)(OR²)(OR³)(OR⁴) (I)

wherein R¹, R², R³ and R⁴ are as defined in the present invention. In an embodiment, optionally in combination with one or more features of the various embodiments described above or below, the hydrolysable silicon alkoxide is a totally hydrolysable silicon alkoxide of formula (I) selected from the group consisting of tetraethylorthosilicate (TEOS), tetramethylorthosilicate (TMOS), and mixtures thereof; preferably tetraethylorthosilicate (TEOS).

In an embodiment, optionally in combination with one or more features of the various embodiments described above or below, the hydrolysable silicon alkoxide is an alkylalkoxide having at least one non-hydrolysable substituent being the non-hydrolysable substituent a substituted or un-substituted (C₁-C₄)alkyl of formula (II);

R⁸-Si(OR⁵)(OR⁶)(OR⁷) (II)

wherein R⁵, R⁶, R⁷ and R⁸ are as defined in the present invention.

In an embodiment, optionally in combination with one or more features of the various embodiments described above or below, the hydrolysable silicon alkoxide is an alkylalkoxide having at least one non-hydrolysable substituent being the non-hydrolysable substituent a substituted or un-substituted (C₁-C₄)alkyl of formula (II) selected from the group consisting of methyltriethoxysilane (MTES), methyltrimethoxysilane (MTMS), ethyltriethoxysilane (ETES), ethyltrimethoxysilane (ETMS), propyltriethoxysilane (PTES), propyltrimethoxysilane (PTMS), butyltriethoxysilane (BTES), butyltrimethoxysilane (BTMS), isopropyltriethoxysilane (IPTES), isopropyltrimethoxysilane (IPTMS), and mixture thereof. In an embodiment, optionally in combination with one or more features of the various embodiments described above or below, the hydrolysable silicon alkoxide is an alkylalkoxide having at least one non-hydrolysable substituent being the non-hydrolysable substituent a substituted or un-substituted (C₁-C₄)alkyl of formula (II) selected from the group consisting of methyltriethoxysilane (MTES), methyltrimethoxysilane (MTMS), and mixture thereof; preferably methyltriethoxysilane (MTES).

In an embodiment, optionally in combination with one or more features of the various embodiments described above or below, the hydrolysable silicon alkoxide is a mixture of at least a totally hydrolysable silicon alkoxide of formula (I) and at least an alkylalkoxide having at least one non-hydrolysable substituent being the non-hydrolysable substituent a substituted or un-substituted (C₁-C₄)alkyl of formula (II) as defined in the present invention. In an embodiment, optionally in combination with one or more features of the various embodiments described above or below, the hydrolysable silicon alkoxide is a mixture of a totally hydrolysable silicon alkoxide of formula (I) selected from the group consisting of tetraethylorthosilicate (TEOS), tetramethylorthosilicate (TMOS) and mixtures thereof; and an alkylalkoxide having at least one non-hydrolysable substituent being the non-hydrolysable substituent a substituted or un-substituted (C₁-C₄)alkyl of formula (II) selected from the group consisting of methyltriethoxysilane (MTES), methyltrimethoxysilane (MTMS), ethyltriethoxysilane (ETES), ethyltrimethoxysilane (ETMS), propyltriethoxysilane (PTES), propyltrimethoxysilane (PTMS), butyltriethoxysilane (BTES), butyltrimethoxysilane (BTMS), isopropyltriethoxysilane (IPTES), isopropyltrimethoxysilane (IPTMS), and mixture thereof; preferably methyltriethoxysilane (MTES), methyltrimethoxysilane (MTMS) and mixtures thereof; preferably a mixture of tetraethylorthosilicate (TEOS) and methyltriethoxysilane (MTES).

In an embodiment, optionally in combination with one or more features of the various embodiments described above or below, the hydrolysable silicon alkoxide is selected from the group consisting of an alkenylalkoxide having at least one non-hydrolysable substituent being the non-hydrolysable substituent a substituted or un-substituted (C₁-C₄)alkyl of formula (II'):

R^{X}-Si(OR⁵)(OR⁶)(OR⁷) (II')

and v) a mixture of at least a totally hydrolysable silicon alkoxide of formula (I) and at least an alkenylalkoxide having at least one non-hydrolysable substituent being the non-hydrolysable substituent a substituted or un-substituted (C₁-C₄)alkyl of formula (II'); wherein: each one of R¹, R², R³, R⁴, R⁵, R⁶ and R⁷ are independently selected from the group consisting of a substituted or un-substituted (C₁-C₁₄)alkyl, (C₅-C₆)aryl, (C₂-C₁₄)alkenyl and (C₂-C₁₄)alkynyl group; and R^{x} is a substituted or un-substituted (C₂-C₁₄)alkenyl.

In an embodiment, optionally in combination with one or more features of the various embodiments described above or below, the hydrolysable silicon alkoxide is an alkenylalkoxide having at least one non-hydrolysable substituent being the non-hydrolysable substituent a substituted or un-substituted (C₁-C₄)alkyl of formula (II') selected from the group consisting of vinyltriethoxysilane (VTES), vinyltrimethoxysilane (VTMS), allyltriethoxysilane, allyltrimethoxysilane, isopropenyltriethoxysilane, isopropenyltrimethoxysilane, and mixture thereof.

In an embodiment, optionally in combination with one or more features of the various embodiments described above or below, the hydrolysable silicon alkoxide is a mixture of at least a totally hydrolysable silicon alkoxide of formula (I) and at least an alkenylalkoxide having at least one non-hydrolysable substituent being the non-hydrolysable substituent a substituted or un-substituted (C₁-C₄)alkyl of formula (II') as defined in the present invention. In an embodiment, optionally in combination with one or more features of the various embodiments described above or below, the hydrolysable silicon alkoxide is a mixture of a totally hydrolysable silicon alkoxide of formula (I) selected from the group consisting of tetraethylorthosilicate (TEOS), tetramethylorthosilicate (TMOS) and mixtures thereof; and an alkenylalkoxide having at least one non-hydrolysable substituent being the non-hydrolysable substituent a substituted or un-substituted (C₁-C₄)alkyl of formula (II') selected from the group consisting vinyltriethoxysilane (VTES), vinyltrimethoxysilane (VTMS), allyltriethoxysilane, allyltrimethoxysilane, isopropenyltriethoxysilane, isopropenyltrimethoxysilane, and mixture thereof.

The term "silicon-organic alkoxide having at least one non-hydrolysable substituent bonded to the silicon atom being the non-hydrolysable substituent other than a substituted or un-substituted (C₁-C₄)alkyl" refers to a silane compound having four substituents. Three of the substituents are alkoxide moieties bonded to the silicon atom by an Si-O bond, which is an hydrolizable bond and the fourth substituent is an epoxide-alkyl moiety bonded to the silicon atom by a Si-C bond which is non-hydrolizable.

In an embodiment, optionally in combination with one or more features of the various embodiments described above or below, the silicon-organic alkoxide having at least one non-hydrolysable substituent bonded to the silicon atom being the non-hydrolysable substituent other than a substituted or un-substituted (C₁-C₄)alkyl is selected from the group consisting of glycidoxypropyltrimethoxysilane (GPTMS), glycidoxypropyltriethoxysilane (GPTES), and mixtures thereof; preferably glycidoxypropyltrimethoxysilane (GPTMS). In another preferred embodiment, the silicon-organic alkoxide having at least one non-hydrolysable substituent bonded to the silicon atom being the non-hydrolysable substituent other than a substituted or un-substituted (C₁-C₄)alkyl is glycidoxypropyltriethoxysilane (GPTES).

In an embodiment, optionally in combination with one or more features of the various embodiments described above or below, step a1) comprises mixing a totally hydrolysable silicon alkoxide of formula (I) as defined in the present invention with a silicon-organic alkoxide having at least one non-hydrolysable substituent bonded to the silicon atom being the non-hydrolysable substituent other than a substituted or un-substituted (C₁-C₄)alkyl of formula (III) as defined in the present invention. In an embodiment, optionally in combination with one or more features of the various embodiments described above or below, step a1) comprises mixing a totally hydrolysable silicon alkoxide of formula (I) selected from the group consisting of tetraethylorthosilicate (TEOS), tetramethylorthosilicate (TMOS) and mixture thereof; and a silicon-organic alkoxide having at least one non-hydrolysable substituent bonded to the silicon atom being the non-hydrolysable substituent other than a substituted or un-substituted (C₁-C₄)alkyl of formula (III) selected from the group consisting of glycidoxypropyltrimethoxysilane (GPTMS), glycidoxypropyltriethoxysilane (GPTES), and mixtures thereof; preferably step a1) comprises mixing tetraethylorthosilicate (TEOS) and glycidoxypropyltrimethoxysilane (GPTMS).

In an embodiment, optionally in combination with one or more features of the various embodiments described above or below, step a1) comprises mixing a silicon-organic alkoxide having at least one non-hydrolysable substituent bonded to the silicon atom being the non-hydrolysable substituent other than a substituted or un-substituted (C₁-C₄)alkyl of formula (III) as defined in the present invention with an alkylalkoxide having at least one non-hydrolysable substituent being the non-hydrolysable substituent a substituted or un-substituted (C₁-C₄)alkyl of formula (II) as defined in the present invention. In an embodiment, optionally in combination with one or more features of the various embodiments described above or below, step a1) comprises mixing an alkylalkoxide having at least one non-hydrolysable substituent being the non-hydrolysable substituent a substituted or un-substituted (C₁-C₄)alkyl of formula (II) selected from the group consisting of methyltriethoxysilane (MTES), methyltrimethoxysilane (MTMS), ethyltriethoxysilane (ETES), ethyltrimethoxysilane (ETMS), propyltriethoxysilane (PTES), propyltrimethoxysilane (PTMS), butyltriethoxysilane (BTES), butyltrimethoxysilane (BTMS), isopropyltriethoxysilane (IPTES), isopropyltrimethoxysilane (IPTMS), and mixture thereof; preferably methyltriethoxysilane (MTES), methyltrimethoxysilane (MTMS) and mixture thereof, and a silicon-organic alkoxide having at least one non-hydrolysable substituent bonded to the silicon atom being the non-hydrolysable substituent other than a substituted or un-substituted (C₁-C₄)alkyl of formula (III) selected from the group consisting of glycidoxypropyltrimethoxysilane (GPTMS), glycidoxypropyltriethoxysilane (GPTES), and mixtures thereof; preferably step a1) comprises mixing methyltriethoxysilane (MTES) and glycidoxypropyltrimethoxysilane (GPTMS).

In an embodiment, optionally in combination with one or more features of the various embodiments described above or below, step a1) comprises mixing a silicon-organic alkoxide having at least one non-hydrolysable substituent bonded to the silicon atom being the non-hydrolysable substituent other than a substituted or un-substituted (C₁-C₄)alkyl of formula (III) as defined in the present invention with an alkenylalkoxide having at least one non-hydrolysable substituent being the non-hydrolysable substituent a substituted or un-substituted (C₁-C₄)alkyl of formula (II') as defined in the present invention. In an embodiment, optionally in combination with one or more features of the various embodiments described above or below, step a1) comprises mixing an alkenylalkoxide having at least one non-hydrolysable substituent being the non-hydrolysable substituent a substituted or un-substituted (C₁-C₄)alkyl of formula (II') selected from the group consisting of vinyltriethoxysilane (VTES), vinyltrimethoxysilane (VTMS), allyltriethoxysilane, allyltrimethoxysilane, isopropenyltriethoxysilane, isopropenyltrimethoxysilane, and mixture thereof, and a silicon-organic alkoxide having at least one non-hydrolysable substituent bonded to the silicon atom being the non-hydrolysable substituent other than a substituted or un-substituted (C₁-C₄)alkyl of formula (III) selected from the group consisting of glycidoxypropyltrimethoxysilane (GPTMS), glycidoxypropyltriethoxysilane (GPTES), and mixtures thereof; preferably step a1) comprises mixing vinyltriethoxysilane (VTES) and glycidoxypropyltrimethoxysilane (GPTMS).

In an embodiment, optionally in combination with one or more features of the various embodiments described above or below, step a1) comprises mixing a totally hydrolysable silicon alkoxide of formula (I) as defined in the present invention, a silicon-organic alkoxide having at least one non-hydrolysable substituent bonded to the silicon atom being the non-hydrolysable substituent other than a substituted or un-substituted (C₁-C₄)alkyl of formula (III) as defined in the present invention with an alkylalkoxide having at least one non-hydrolysable substituent being the non-hydrolysable substituent a substituted or un-substituted (C₁-C₄)alkyl of formula (II) as defined in the present invention. In an embodiment, optionally in combination with one or more features of the various embodiments described above or below, step a1) comprises mixing a totally hydrolysable silicon alkoxide of formula (I) selected from the group consisting of tetraethylorthosilicate (TEOS), tetramethylorthosilicate (TMOS) and mixture thereof; an alkylalkoxide having at least one non-hydrolysable substituent being the non-hydrolysable substituent a substituted or un-substituted (C₁-C₄)alkyl of formula (II) selected from the group consisting of methyltriethoxysilane (MTES), methyltrimethoxysilane (MTMS), ethyltriethoxysilane (ETES), ethyltrimethoxysilane (ETMS), propyltriethoxysilane (PTES), propyltrimethoxysilane (PTMS), butyltriethoxysilane (BTES), butyltrimethoxysilane (BTMS), isopropyltriethoxysilane (IPTES), isopropyltrimethoxysilane (IPTMS), and mixture thereof; preferably methyltriethoxysilane (MTES), methyltrimethoxysilane (MTMS) and mixture thereof, and silicon-organic alkoxide having at least one non-hydrolysable substituent bonded to the silicon atom being the non-hydrolysable substituent other than a substituted or un-substituted (C₁-C₄)alkyl of formula (III) selected from the group consisting of glycidoxypropyltrimethoxysilane (GPTMS), glycidoxypropyltriethoxysilane (GPTES), and mixtures thereof. Preferably step a1) comprises mixing tetraethylorthosilicate (TEOS), methyltriethoxysilane (MTES) and glycidoxypropyltrimethoxysilane (GPTMS).

In an embodiment, optionally in combination with one or more features of the various embodiments described above or below, step a1) comprises mixing a totally hydrolysable silicon alkoxide of formula (I) as defined in the present invention, a silicon-organic alkoxide having at least one non-hydrolysable substituent bonded to the silicon atom being the non-hydrolysable substituent other than a substituted or un-substituted (C₁-C₄)alkyl of formula (III) as defined in the present invention with an alkenylalkoxide having at least one non-hydrolysable substituent being the non-hydrolysable substituent a substituted or un-substituted (C₁-C₄)alkyl of formula (II') as defined in the present invention. In an embodiment, optionally in combination with one or more features of the various embodiments described above or below, step a1) comprises mixing a totally hydrolysable silicon alkoxide of formula (I) selected from the group consisting of tetraethylorthosilicate (TEOS), tetramethylorthosilicate (TMOS) and mixture thereof; an alkenylalkoxide having at least one non-hydrolysable substituent being the non-hydrolysable substituent a substituted or un-substituted (C₁-C₄)alkyl of formula (II') selected from the group consisting vinyltriethoxysilane (VTES), vinyltrimethoxysilane (VTMS), allyltriethoxysilane, allyltrimethoxysilane, isopropenyltriethoxysilane, isopropenyltrimethoxysilane and mixture thereof, and silicon-organic alkoxide having at least one non-hydrolysable substituent bonded to the silicon atom being the non-hydrolysable substituent other than a substituted or un-substituted (C₁-C₄)alkyl of formula (III) selected from the group consisting of glycidoxypropyltrimethoxysilane (GPTMS), glycidoxypropyltriethoxysilane (GPTES), and mixtures thereof. Preferably step a1) comprises mixing tetraethylorthosilicate (TEOS), vinyltriethoxysilane (VTES) and glycidoxypropyltrimethoxysilane (GPTMS).

In an embodiment, optionally in combination with one or more features of the various embodiments described above or below, in step a1) the molar ratio between the hydrolysable silicon alkoxide and the silicon-organic alkoxide having at least one non-hydrolysable substituent bonded to the silicon atom being the non-hydrolysable substituent other than a substituted or un-substituted (C₁-C₄)alkyl is comprised from 0.1 to 4; preferably the molar ratio is comprised from 0.5 to 1; more preferably the molar ratio is 1. In an embodiment, optionally in combination with one or more features of the various embodiments described above or below, in step a1) the hydrolysable silicon alkoxide is tetraethylorthosilicate (TEOS), or alternatively methyltriethoxysilane (MTES) or alternatively a mixture of tetraethylorthosilicate (TEOS) and methyltriethoxysilane (MTES); and the silicon-organic alkoxide having at least one non-hydrolysable substituent bonded to the silicon atom being the non-hydrolysable substituent other than a substituted or un-substituted (C₁-C₄)alkyl is glycidoxypropyltrimethoxysilane (GPTMS) and the molar ratio is comprised from 0.1 to 4.

In an embodiment, optionally in combination with one or more features of the various embodiments described above or below, the C₁-C₈ alcohol used in the process of the invention is selected from the group consisting of ethanol, butanol, propanol, and mixtures thereof. The term "alcohol" refers to an "alkane" wherein at least one hydrogen atom is substituted by a hydroxyl group and which contains the number of carbon atoms specified in the description or claims. The term "alkane" refers to a saturated, branched or linear hydrocarbon which contains the number of carbon atoms specified in the description or claims. Examples include methanol, ethanol, n-propanol, iso-propanol, butanol, iso-butanol, and sec-butanol. In an embodiment, optionally in combination with one or more features of the various embodiments described above or below, the C₁-C₈ alcohol is n-propanol. In an embodiment, optionally in combination with one or more features of the various embodiments described above or below, the molar ratio between the hydrolysable silicon alkoxide and the C₁-C₈ alcohol is comprised from 0.25 to 8; preferably comprised from 0.5 to 5; more preferably comprised from 1 to 3. In a particular embodiment, the molar ratio between the hydrolysable silicon alkoxide and the C₁-C₈ alcohol is 2.

In an embodiment, optionally in combination with one or more features of the various embodiments described above or below, the acid catalyst is an inorganic acid selected from the group consisting of H₂SO₄, HCI, HNO₃, and mixtures thereof; preferably the acid catalyst is H₂SO₄. The acid catalyst is in form of an aqueous solution having a pH lower than 5; preferably the pH is comprised from 0 to 2. In an embodiment, the acid catalyst is H₂SO₄ and is in form of an aqueous acidic solution of H₂SO₄ having a pH lower than 5; preferably the pH is comprised from 0 to 2.

In an embodiment, the molar ratio between the hydrolysable silicon alkoxide and the aqueous solution of the acid catalyst is comprised from 0.10 to 0.50; preferably comprised from 0.20 to 0.40; more preferably comprised from 0.15 to 0.30.

As mentioned above, the organic precursor is selected from the group consisting of a bisphenol compound of formula (VI), a substituted-phenol of formula (IX), a compound of formula (X) and mixture thereof.

In an embodiment, optionally in combination with one or more features of the various embodiments described above or below, the organic precursor is selected from the group consisting of a bisphenol compound of formula (VI), a substituted-phenol of formula (IX), and mixture thereof.

A bisphenol is a compound which contains two hydroxyphenyl functionalities. In an embodiment, optionally in combination with one or more features of the various embodiments described above or below, the organic precursor is a bisphenol compound of formula (VI) 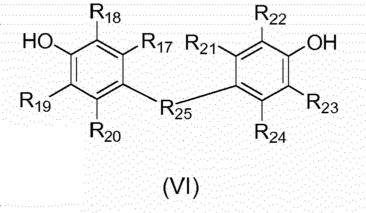 wherein:
R₁₇, R₁₈, R₁₉, R₂₀, R₂₁, R₂₂, R₂₃ and R₂₄ are independently selected from the group consisting of H, substituted or un-substituted (C₁-C₆)alkyl, (C₅-C₆)aryl, (C₂-C₁₄)alkenyl, and (C₂-C₁₄)alkyl-CH=CH-, and substituted or un-substituted phenyl;
R₂₅ is selected from the group consisting of CR₂₆R₂₇, SO₂, a compound of formula (VII) 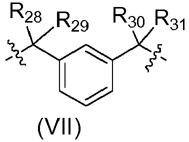 and a compound of formula (VIII) 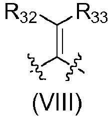
R₂₆ and R₂₇ are independently selected from the group consisting of H, substituted or un-substituted (C₁-C₆)alkyl, (C₅-C₆)aryl, (C₂-C₁₄)alkenyl, (C₂-C₁₄)alkyl-CH=CH-, and substituted or un-substituted phenyl;
R₂₈, R₂₉, R₃₀ and R₃₁ are independently selected from the group consisting of H, and substituted or un-substituted (C₁-C₆)alkyl, (C₅-C₆)aryl, (C₂-C₁₄)alkenyl, and (C₂-C₁₄)alkyl-CH=CH-; and
R₃₂ and R₃₃ are independently selected from the group consisting of halogen and substituted or un-substituted (C₁-C₆)alkyl, (C₅-C₆)aryl, (C₂-C₁₄)alkenyl, and (C₂-C₁₄)alkyl-CH=CH-.

In an embodiment, optionally in combination with one or more features of the various embodiments described above or below, the organic precursor is a bisphenol compound selected from the group consisting of Bisphenol A (2,2-Bis(4-hydroxyphenyl)propane), Bisphenol AP (1,1-Bis(4-hydroxyphenyl)-1-phenyl-ethane), Bisphenol AF (2,2-Bis(4-hydroxyphenyl)hexafluoropropane), Bisphenol B (2,2-Bis(4-hydroxyphenyl)butane), Bisphenol BP (Bis-(4-hydroxyphenyl)diphenylmethane), Bisphenol C (2,2-Bis(3-methyl-4-hydroxyphenyl)propane), Bisphenol C 2 (Bis(4-hydroxyphenyl)-2,2-dichlorethylene), Bisphenol E (1,1-Bis(4-hydroxyphenyl)ethane), Bisphenol F (Bis(4-hydroxyphenyl)methane), Bisphenol G (2,2-Bis(4-hydroxy-3-isopropyl-phenyl)propane), Bisphenol M (1,3-Bis(2-(4-hydroxyphenyl)-2-propyl)benzene), Bisphenol S (Bis(4-hydroxyphenyl)sulfone), Bisphenol P (1,4-Bis(2-(4-hydroxyphenyl)-2-propyl)benzene), Bisphenol PH (5,5' -(1-Methylethyliden)-bis[1,1'-(bisphenyl)-2-ol]propane), Bisphenol TMC (1,1-Bis(4-hydroyphenyl)-3,3,5-trimethyl-cyclohexane), Bisphenol Z (1,1-Bis(4-hydroxyphenyl)-cyclohexane), 2,2'-diallyl-bisphenol A and mixture thereof. In an embodiment, optionally in combination with one or more features of the various embodiments described above or below, the organic precursor is the bisphenol Bisphenol A (BPA).

In an embodiment, optionally in combination with one or more features of the various embodiments described above or below, the organic precursor is a substituted phenol of formula (IX). 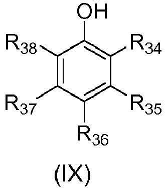 wherein: R₃₄, R₃₅, R₃₆, R₃₇ and R₃₈ are independently selected from the group consisting of a H, substituted or un-substituted (C1-C14)alkyl, (C5-C6)aryl, (C2-C14)alkenyl, and (C2-C14)alkyl-CH=CH, being at least one of R₃₄, R₃₅, R₃₆, R₃₇ and R₃₈ other than H. In an embodiment, optionally in combination with one or more features of the various embodiments described above or below, the organic precursor is a substituted phenol selected from the group consisting of 2-allyl-phenol (AP), 2-allyl-4-methyl-phenol, 2-ethyl-phenol, 2-propyl-phenol, 2-propenyl-phenol and mixtures thereof; preferably 2-allyl-phenol (AP).

In an embodiment, optionally in combination with one or more features of the various embodiments described above or below, the organic precursor is a compound of formula (X) 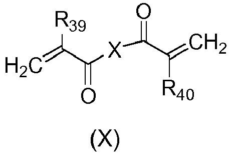 wherein: R₃₉ and R₄₀ are independently selected from the group consisting of H and (C₁-C₆)alkyl; and X is selected from the group consisting of a compound of formula (XI) 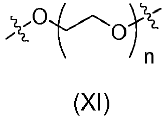
wherein n is an integer from 1 to 6;
and a compound of formula (XII); 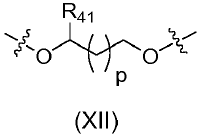
wherein: R₄₁ is selected from the group consisting of H and (C₁-C₆)alkyl and p is an integer from 1 to 8.

In an embodiment, optionally in combination with one or more features of the various embodiments described above or below, the organic precursor is a compound of formula (X) as defined above wherein both R₃₉ and R₄₀ are H. In an embodiment, optionally in combination with one or more features of the various embodiments described above or below, the organic precursor is a compound of formula (X) as defined above wherein both R₃₉ and R₄₀ are (C₁-C₆)alkyl; preferably methyl.

In an embodiment, optionally in combination with one or more features of the various embodiments described above or below, the organic precursor is a compound of formula (X) as defined above wherein X is a compound of formula (XI) as defined above; preferably X is a compound of formula (XI) and n is from 1 to 5.

In an embodiment, optionally in combination with one or more features of the various embodiments described above or below, the organic precursor is a compound of formula (X) as defined above wherein X is a compound of formula (XII) as defined above. In an embodiment, optionally in combination with one or more features of the various embodiments described above or below, the organic precursor is a compound of formula (X) as defined above wherein X is a compound of formula (XII) and R₄₁ is H. In an embodiment, optionally in combination with one or more features of the various embodiments described above or below, the organic precursor is a compound of formula (X) as defined above wherein X is a compound of formula (XII) and R₄₁ is (C₁-C₆)alkyl; preferably methyl. In an embodiment, optionally in combination with one or more features of the various embodiments described above or below, the organic precursor is a compound of formula (X) as defined above wherein X is a compound of formula (XII) and p is from 1 to 4.

In an embodiment, optionally in combination with one or more features of the various embodiments described above or below, the organic precursor is a compound of formula (X) selected from the group consisting of ethylene glycol dimethacrylate, di(ethylene glycol) dimethacrylate, tri(ethylene glycol) dimethacrylate, tetra(ethylene glycol) dimethacrylate, ethylene glycol diacrylate, di(ethylene glycol) diacrylate, 1,3-butanediol diacrylate, 1,6-hexanediol diacrylate, 1,6-hexanediol dimethacrylate, and mixture thereof. In an embodiment, optionally in combination with one or more features of the various embodiments described above or below, the organic precursor is selected from the group consisting of ethylene glycol dimethacrylate (EGDMA), di(ethylene glycol) dimethacrylate, tri(ethylene glycol) dimethacrylate, tetra(ethylene glycol) dimethacrylate, ethylene glycol diacrylate, di(ethylene glycol) diacrylate, tri(ethylene glycol) diacrylate, tetra(ethylene glycol) diacrylate, 1,3-butanediol dimethacrylate, 1,3-butanediol diacrylate, 1,6-hexanediol dimethacrylate, 1,6-hexanediol diacrylate; particularly ethylene glycol dimethacrylate (EGDMA).

In an embodiment, optionally in combination with one or more features of the various embodiments described above or below, the organic precursor is a compound of formula (X) as defined above, and the catalyst is 2,2'-azobis(2-methylpropionitrile) (AIBN).

In an embodiment, optionally in combination with one or more features of the various embodiments described above or below, the molar ratio between the hydrolysable silicon alkoxide and the organic precursor is comprised from 0.5 to 4; preferably comprised from 1 to 3; more preferably comprised from 1 to 2.

In an embodiment, optionally in combination with one or more features of the various embodiments described above or below, the epoxy-ring opening catalyst is present and is selected from the group consisting of imidazole compounds, aliphatic amines, phenylenediamines, carboxylic acids and their anhydrides and mixtures thereof. Examples of appropriate imidazole compounds for the present invention includes, without limitation, (1-methylimidazole (1-MI), 2-methylimidazole (2-MI), 2-phenylimidazole (2-Phl), 1,2-dimethylimidazole (1,2-DMI), 2-ethyl-4-methylimidazole (2,4-EMI), 1-benzyl-2-methylimidazole (1,2-BMI). Examples of appropriate aliphatic amine includes, without limitation, ethylenediamine (EDA), tris(2-aminoethyl)amine (TAEA), triethylenetetramine (TETA), or diethylenetriamine (DETA). Examples of phenylenediamines includes without limitation, o-phenylenediamine (o-PDA), m-phenylenediamine (m-PDA), or p-phenylenediamine (p-PDA). Examples of appropriate carboxylic acids includes, without limitation, phthalic acid (PA), hexahydrophthalic acid (HHPA), or tetrahydrophthalic acid (THPA). Examples of appropriate anhydrides of carboxylic acids includes, without limitation phthalic anhydride (PA), hexahydrophthalic anhydride (HHPA), or tetrahydrophthalic anhydride (THPA).

In an embodiment, optionally in combination with one or more features of the various embodiments described above or below, the epoxy-ring opening catalyst is present and is the imidazole compound 1-methylimidazole (1-MI). In an embodiment, optionally in combination with one or more features of the various embodiments described above or below, the molar ratio between the hydrolysable silicon alkoxide and the epoxy-ring opening catalyst is comprised from 50 to 150; preferably comprised from 70 to 125; more preferably the molar ratio between the hydrolysable silicon alkoxide and the epoxy-ring opening catalyst is 100.

In an embodiment, optionally in combination with one or more features of the various embodiments described above or below, in step a3) the resulting mixture is stirred at a temperature comprised from 35°C to 45°C for the period of time to obtain the first sol; preferably at a temperature comprised from 35°C to 45°C for a period of time comprised from 2h to 4h; preferably at 40°C for 3h to obtain the first sol.

As mentioned above, an aspect of the present invention refers to a process for preparing a sol-gel coating composition which comprises providing a second sol (step b) obtainable by a process which comprises: b1) first mixing at least one hydrolysable metal alkoxide with one or more C₁-C₈ alcohols under an inert and dry atmosphere; b2) adding a complexion agent to the resultant mixture obtained in step b1); and stirring the resultant mixture for an appropriate period of time; b3) adding an aqueous solution of at least one acid catalyst to the resulting mixture obtained in step b2); and stirring the resulting mixture at a temperature comprised from 15°C to 30°C for an appropriate period of time to obtain the second sol; wherein the metal atom in the hydrolysable metal alkoxide is selected from the group consisting of Ti, Zr, Al, B, Sn and V.

Step b1) is performed under an inert and dry atmosphere. As used herein the term "inert atmosphere" refers to an atmosphere unsuitable to support combustion such as for example an atmosphere containing up to 10% oxygen.
In an embodiment, optionally in combination with one or more features of the various embodiments described above or below, step b1) is performed under an inert atmosphere that contain up to 5% oxygen. The term "dry atmosphere" refers to an atmosphere having humidity levels below 15%, preferably below 10%; more preferably below 5%.

In an embodiment, optionally in combination with one or more features of the various embodiments described above or below, step b1) is performed with one or more C₁-C₈ alcohols purged with an inert gas. The expression "purged with an inert gas" refers to insert an inert gas into the reaction tank to reduce the amount of oxygen and/or the humidity levels as define din the present invention.

In an embodiment, optionally in combination with one or more features of the various embodiments described above or below, in step b1) the metal atom in the hydrolysable metal alkoxide is selected from the group consisting of Ti, Zr, Al, B, Sn and V; preferably the metal atom in the hydrolysable metal alkoxide is selected from Zr and Ti; more preferably Zr. In an embodiment, optionally in combination with one or more features of the various embodiments described above or below, in step b1) the hydrolysable metal alkoxide is a compound of formula (IV):

(OR¹³)(OR¹⁴)(OR¹⁵)(OR¹⁶)Metal (IV)

wherein each one of R¹³, R¹⁴, R¹⁵ and R¹⁶ are independently selected from the group consisting of substituted or un-substituted (C₁-C₁₄)alkyl, (C₂-C₁₄)aryl, (C₂-C₁₄)alkenyl, or (C₂-C₁₄)alkynyl, and the metal atom is as defined in the first aspect of the invention. In an embodiment the hydrolysable metal alkoxide is one wherein the metal is zirconium and the hydrolysable metal alkoxide is selected from the group consisting of zirconium (IV) n-propoxide (TPOZ), zirconium (IV) isopropoxide, zirconium (IV) n-butoxide, zirconium (IV) isobutoxide, and mixtures thereof; preferably zirconium (IV) n-propoxide (TPOZ).

In an embodiment, optionally in combination with one or more features of the various embodiments described above or below, the molar ratio between the hydrolysable silicon alkoxide and the hydrolysable metal alkoxide is comprised from 0.25 to 4; preferably comprised from 1 to 4; more preferably comprised from 1.15 to 3.

In an embodiment, optionally in combination with one or more features of the various embodiments described above or below, in step b1) the C₁-C₈ alcohol is as defined above for step a1). Thus, all embodiments disclosed above for step a1) of the process for preparing the first sol also apply for step b1) of the process for preparing the second sol. In an embodiment, optionally in combination with one or more features of the various embodiments described above or below, the molar ratio between the hydrolysable silicon alkoxide preferably TEOS, MTES, or a mixture of TEOS and MTES, and the alcohol is comprised from 0.1 to 1; preferably comprised from 0.1 to 0.7.

In an embodiment, optionally in combination with one or more features of the various embodiments described above or below, in step b2) the complexion agent is selected from the group consisting of acetyl acetone (AcAc), methacrylic acid, acetic acid, isobutyric acid, bipyridine, and mixtures thereof; preferably acetyl acetone. In an embodiment, optionally in combination with one or more features of the various embodiments described above or below, the molar ratio between the hydrolysable metal alkoxide and the complexion agent is comprised from 0.5 to 4; preferably comprised from 0.7 to 3; more preferably comprised from 0.7 to 2.

In an embodiment, optionally in combination with one or more features of the various embodiments described above or below, in step b2) the resultant mixture is stirred for an appropriate period of time; preferably for a period of time comprised from 0.5h to 2h; more preferably comprised from 0.75h to 1h.

In an embodiment, optionally in combination with one or more features of the various embodiments described above or below, in step b3) the acid catalyst which is in form of aqueous solution added to the resulting mixture obtained in step b2) is the same as defined above for step a2). Thus, all embodiments disclosed above for step a2) of the process for preparing the first sol also apply for step b3) of the process for preparing the second sol. In an embodiment, the aqueous solution of the acid catalyst has a pH lower than 7; preferably the pH is comprised from 0 to 5. In an embodiment, optionally in combination with one or more features of the various embodiments described above or below, the molar ratio between the hydrolysable silicon alkoxide, preferably TEOS, MTES, or a mixture of TEOS and MTES and the aqueous solution of the acid catalyst is comprised from 0.30 to 1; preferably comprised from 0.50 to 0.90.

In an embodiment, optionally in combination with one or more features of the various embodiments described above or below, in step b2) the resultant mixture is stirred for an appropriate period of time, preferably for a period of time comprised from 24h to 48h; preferably comprised from 24h to 30h to obtain a second sol.

In an embodiment, optionally in combination with one or more features of the various embodiments described above or below, the process for preparing a sol-gel coating composition comprises providing a second sol (step b) obtainable by a process which comprises: b1) first mixing a hydrolysable Zirconium alkoxide with n-propanol previously purged with an inert gas; b2) adding the acetyl acetone to the resultant mixture obtained in step b1); and stirring the resultant mixture for an appropriate period of time; preferably comprised from 0.75h to 1h; b3) adding an aqueous solution of H₂SO₄ having a pH lower than 7; preferably the pH is comprised from 0 to 5 to the resulting mixture obtained in step b2); and stirring the resulting mixture at a temperature comprised from 15°C to 30°C for an appropriate period of time; preferably comprised from 24h to 30h to obtain the second sol.

As mentioned above, the first aspect of the present invention refers to a process for preparing a sol-gel coating composition which comprises providing a first sol (step a) obtainable by the process as defined above; and a second sol (step b) obtainable by a process as defined above; and c) mixing the first sol with the second sol, and ageing the resulting mixture by stirring at a temperature comprised from 15°C to 30°C for an appropriate period of time; preferably comprised from 24h to 72h; particularly the ageing is performed at a temperature of 22°C for 48h.

In an embodiment, optionally in combination with one or more features of the various embodiments described above or below, the process for preparing a sol-gel coating composition of the first aspect of the invention comprises: firstly, carrying out steps a1)-a3) for preparing the first sol and secondly, carrying out steps b1)-b3) for preparing the second sol; and subsequently carrying out step c). All embodiments disclosed above for steps a1)-a3); b1)-b3); and step c) of the process of the first aspect of the invention also apply for this process.

The sol-gel coating composition of the invention may be defined by its preparation process as defined above and therefore, the sol-gel coating composition obtainable by the process above is considered part of the invention. Thus, the second aspect of the invention relates to a sol-gel coating composition for coating a substrate defined above obtainable by the process as defined in the first aspect of the invention that is a process which comprises: a) providing a first sol obtainable by a process which comprises: a1) first mixing at least one hydrolysable silicon alkoxide and at least one silicon-organic alkoxide having at least one non-hydrolysable substituent bonded to the silicon atom being the non-hydrolysable substituent other than a substituted or un-substituted (C₁-C₄)alkyl with one or more C₁-C₈ alcohols; a2) preparing a second mixture by mixing an aqueous solution of at least one acid catalyst having a pH lower than 5; preferably the pH is comprised from 0 to 2, at least one organic precursor, one or more C₁-C₈ alcohols and optionally at least one epoxy-ring opening catalyst; a3) adding the second mixture obtained in step a2) to the resulting mixture of step a1); and stirring the resulting mixture at a temperature comprised from 35°C to 45°C for an appropriate period of time to obtain the first sol; b) providing a second sol obtainable by a process which comprises: b1) first mixing at least one hydrolysable metal alkoxide with one or more C₁-C₈ alcohols under an inert and dry atmosphere; b2) adding a complexion agent to the resultant mixture obtained in step b1); and stirring the resultant mixture for an appropriate period of time; b3) adding an aqueous solution of at least one acid catalyst having a pH lower than 7; preferably the pH is comprised from 0 to 5 to the resulting mixture obtained in step b2) and stirring the resulting mixture at a temperature comprised from 15 °C to 30 °C for an appropriate period of time to obtain the second sol; wherein the metal atom in the hydrolysable metal alkoxide is selected from the group consisting of Ti, Zr, Al, B, Sn and V; and c) mixing the first sol with the second sol, and ageing the resulting mixture by stirring at a temperature comprised from 15°C to 30°C for a period of time comprised from 24h to 72h, wherein the silicon-organic alkoxide having at least one non-hydrolysable substituent bonded to the silicon atom being the non-hydrolysable substituent other than a substituted or un-substituted (C₁-C₄)alkyl is a compound of formula (III)

R⁹-(CH₂)ₘ-Si(OR¹⁰)(OR¹¹)(OR¹²) (III)

wherein each one of R¹⁰, R¹¹ and R¹² are independently selected from the group consisting of a substituted or un-substituted (C₁-C₁₄)alkyl, (C₅-C₆)aryl, (C₂-C₁₄)alkenyl, and (C₂-C₁₄)alkyl-CH=CH-; m is an integer comprised from 0 to 20; and R⁹ is a compound of formula (V) 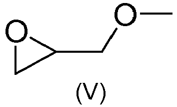 and the organic precursor is selected from the group consisting of a bisphenol compound of formula (VI) 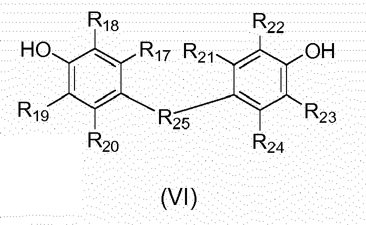 wherein: R₁₇, R₁₈, R₁₉, R₂₀, R₂₁, R₂₂, R₂₃ and R₂₄ are independently selected from the group consisting of H, substituted or un-substituted (C1-C6)alkyl, (C₅-C₆)aryl, (C₂-C₁₄)alkenyl, and (C₂-C₁₄)alkyl-CH=CH- and substituted or un-substituted phenyl; R₂₅ is selected from the group consisting of CR₂₆R₂₇, SO₂, a compound of formula (VII) 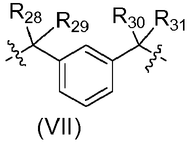 and a compound of formula (VIII) 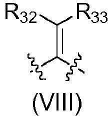 R₂₆ and R₂₇ are independently selected from the group consisting of H, substituted or un-substituted (C₁-C₆)alkyl, (C₅-C₆)aryl, (C₂-C₁₄)alkenyl, (C₂-C₁₄)alkyl-CH=CH-, and substituted or un-substituted phenyl; R₂₈, R₂₉, R₃₀ and R₃₁ are independently selected from the group consisting of H, and substituted or un-substituted (C₁-C₆)alkyl, (C₅-C₆)aryl, (C₂-C₁₄)alkenyl, and (C₂-C₁₄)alkyl-CH=CH-; and R₃₂ and R₃₃ are independently selected from the group consisting of halogen and substituted or un-substituted (C₁-C₆)alkyl, (C₅-C₆)aryl, (C₂-C₁₄)alkenyl, and (C₂-C₁₄)alkyl-CH=CH-; a substituted phenol of formula (IX) 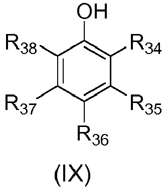 wherein: R₃₄, R₃₅, R₃₆, R₃₇ and R₃₈ are independently selected from the group consisting of a H, substituted or un-substituted (C₁-C₁₄)alkyl, (C₅-C₆)aryl, (C₂-C₁₄)alkenyl, and (C₂-C₁₄)alkyl-CH=CH, being at least one of R₃₄, R₃₅, R₃₆, R₃₇ and R₃₈ other than H; a compound of formula (X) 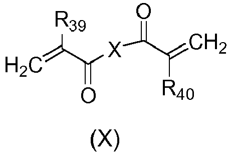 wherein: R₃₉ and R₄₀ are independently selected from the group consisting of H and (C₁-C₆)alkyl; and X is selected from the group consisting of a compound of formula (XI) 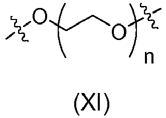 wherein n is an integer from 1 to 6; and a compound of formula (XII); 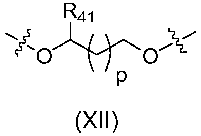 wherein: R₄₁ is selected from the group consisting of H and (C₁-C₆)alkyl and p is an integer from 1 to 8; and mixture thereof.

In an embodiment, optionally in combination with one or more features of the various embodiments described above or below, the invention relates to a sol-gel coating composition for coating a substrate defined above obtainable by the process as defined in the first aspect of the invention wherein the organic precursor is selected from the group consisting of a compound of formula (VI), a compound of formula (IX) and mixture thereof.

In an embodiment, optionally in combination with one or more features of the various embodiments described above or below, the sol-gel coating composition of the invention further comprises one or more additives. In an embodiment, optionally in combination with one or more features of the various embodiments described above or below, the additive is selected from the group consisting of corrosion inhibitors, inks, conductive polymers, and photoinitiators. Examples of appropriate corrosion inhibitors for the present invention include, without limitation, inorganic salts of Cerium, Yttrium, and Manganese; organic compounds such as benzotriazol, propargyl alcohol, 8-hydroxyquinoline; ceramic or metallic nanoparticles doped or not with these corrosion inhibitors. Examples of appropriate inks for the present invention include, without limitation, inorganic and organic inks. Examples of organic inks include, without limitation, erythrosine B, calcien, fluoroscein, trypan blue, and brilliant green. Examples of appropriate conductive polymers for the present invention include, without limitation, polyaniline (PANI), polypyrrole (PPy), or poly(3,4-ethylenedioxythiophene) (PDOT). Examples of appropriate photoinitiator appropriate for the present invention include, without limitation, cationic UV curing photoinitiators like diaryliodonium or triarylsulfonium salts and UV radical photoinitiators like 2-benzl-2-N,N-dimethylamino-1-(4- morpholinophenyl) butanone, and 2,2-dimethoxy-2-phenylacetophenone.

As it is shown in the examples the sol-gel coating composition of the invention is useful as coating agent for the preparation of durable sol-gel coated substrate having enhanced corrosion resistant and adhesion properties than the ones disclosed in the state of the art.

The present invention also relates to processes for coating a substrate for providing enhanced corrosion resistant properties and durability. Thus, the third aspect of the invention relates to a process for preparing a coated substrate which comprises: d) depositing the sol-gel coating composition as defined in the second aspect of the invention over the substrate; and e) curing the coating obtained in step d).

For the purposes of the invention, the term "substrate" refers to any material susceptible to be spoiled. In an embodiment, optionally in combination with one or more features of the various embodiments described above or below, the substrate is selected from the group consisting of metal, polymeric substrate, glass, and ceramic. In an embodiment, substrate is metal; preferably the metal is selected from the group consisting of aluminium, magnesium, carbon steel, stainless steel, and alloy thereof, as well as these metals and metallic alloys treated with conventional coatings that are commonly applied such as galvanising, electroplating, electroless plating, electrophoretic deposition, anodising, chemical conversion treatments, thermochemical surface treatments, thin films applied by dry techniques (e.g. Plasma Vapour Deposition, Chemical Vapour Deposition, thermal spraying), plasma based surface treatments. Preferably the substrate is an alloy of aluminium, an alloy of magnesium, galvanised steel and Zn electroplated steel.

In an embodiment, optionally in combination with one or more features of the various embodiments described above or below, the process further comprises a previous step prior to step d) which comprises conditioning the substrate. The conditioning step of the substrate facilitates the deposition and/or coating steps. Regarding the nature of the substrate, the conditioning step is performed by using the corresponding technics known in the state of the art such as for example degreasing, cleaning, and/or pickling the substrate.

The appropriate preparation/pre-treatment conditions can readily be determined by those skilled in the art according to the type of substrate being used. In a particular embodiment, optionally in combination with one or more features of the various embodiments described above or below, when the substrate is carbon steel then, the conditioning steps comprises degreasing and cleaning the substrate. In another particular embodiment, optionally in combination with one or more features of the various embodiments described above or below, when the substrate is galvanised steel then, the conditioning steps comprises alkaline cleaning of the substrate and optionally acid pickling. In a particular embodiment, optionally in combination with one or more features of the various embodiments described above or below, when the substrate is aluminium/magnesium the conditioning steps comprises an alkaline cleaning followed by acidic pickling. In a particular embodiment, optionally in combination with one or more features of the various embodiments described above or below, when the substrate is stainless steel then, the conditioning steps comprises an alkaline degreasing and cleaning the substrate, and optionally followed by an acidic pickling of the substrate.

Example of known technics used for performing the conditioning step of the substrate can be, among others, plasma cleaning, UV-Ozone cleaning, ultrasonically cleaning and wet-chemical cleaning.

Step d) of the process for preparing a coated substrate of the present invention can be performed using the known technics of the state of the art for depositing a coating over a substrate. In an embodiment, optionally in combination with one or more features of the various embodiments described above or below, the sol-gel coating composition of the invention can be deposited over the substrate (step d) using a technic selected from the group consisting of spin-coating, web-coating, dip-coating, spray-coating, ink-jet printing, doctor blade coating, printing such as screen-printing, ink-jet printing, flexographic printing, gravure printing, and micro-gravure printing. In an embodiment, optionally in combination with one or more features of the various embodiments described above or below, the sol-gel coating composition of the invention is deposited over the substrate (step d) by dipping the substrate in the sol-gel coating composition of the second aspect of the invention to obtain a corrosion resistant sol-gel coated substrate.

In an embodiment, optionally in combination with one or more features of the various embodiments described above or below, the sol-gel coating composition of the invention is deposited over the substrate (step d) by dipping the substrate in the sol-gel coating composition of the second aspect of the invention at a deposition rate comprised from 2 cm/min to 40 cm/min.

As it is mentioned above, the process for preparing a coated substrate comprises a curing step e) after the deposition of the sol-gel coating composition of the invention over the substrate. Step e) of the process of the invention can be performed using the known technics of the state of the art for curing a coating on a substrate. In an embodiment, optionally in combination with one or more features of the various embodiments described above or below, the curing step (step e) is performed by a technic selected from the group consisting of thermal curing; photochemical curing such as ultraviolet curing and infrared curing; microwave induced curing; and other possibilities like latent heat curing when substrate undergoes previous processes that bring residual heat. In an embodiment, optionally in combination with one or more features of the various embodiments described above or below, the curing step (step e) is performed by thermal curing at a temperature comprised from 80°C to 220°C for an appropriate period of time; preferably for a period of time comprised from 0.5h to 48 h; particularly at a temperature comprised from 100°C to 200°C for 1h to 12h.

In an embodiment, optionally in combination with one or more features of the various embodiments described above or below, the process for preparing the coated substrate of the third aspect of the invention further comprises depositing one or more additional coating (for instance, primers, paints and top-coats, lacquers, other sol-gel coatings) over the sol-gel corrosion resistant coating of the invention. Thus, the process of the third aspect of the invention further comprises additional steps f) and g) after step e), which comprises: f) depositing one or more coating over the cured coating obtained in step e); and g) optionally, depositing a top-coat coating over the coating obtained in step f).

Step f) of the process can be performed using the known technics of the state of the art for depositing a coating over a substrate. In an embodiment, optionally in combination with one or more features of the various embodiments described above or below, step f) can be performed using a technic selected from the group consisting of spin-coating, web-coating, dip-coating, spray-coating, ink-jet printing, doctor blade coating, printing such as screen-printing, ink-jet printing, flexographic printing, gravure printing, micro-gravure printing, electrophoretic deposition if sol-gel composition contains nanoparticles. In an embodiment, optionally in combination with one or more features of the various embodiments described above or below, step f) is performed by spraying the cured sol-gel coating obtained in step e) with a coating composition.

Step g) of the process can be performed using the known technics of the state of the art for depositing a top-coat coating over a substrate. In an embodiment, optionally in combination with one or more features of the various embodiments described above or below, step g) can be performed using a technic selected from the group consisting of spin-coating, web-coating, dip-coating, spray-coating, ink-jet printing, doctor blade coating, printing such as screen-printing, ink-jet printing, flexographic printing, gravure printing, micro-gravure printing, electrophoretic deposition if sol-gel composition contains nanoparticles. In an embodiment, optionally in combination with one or more features of the various embodiments described above or below, step g) is performed by spraying the cured coating obtained in step e) or in step f) with a top-coat coating composition.

The corrosion resistant sol-gel coated substrates of the invention may be defined by its preparation process as defined above and therefore, those coated substrates obtainable by the process above is considered the fourth aspect of the invention. Thus, a coated substrate obtainable by a process which comprises: d) depositing the sol-gel coating composition as defined in the second aspect of the invention over the substrate; e) curing the coating obtained in step d) is also part of the invention; and optionally f) depositing one or more coating over the cured coating obtained in step e); or alternatively f) depositing one or more coating over the cured coating obtained in step e); and g) depositing a top-coat coating over the coating obtained in step f).

All the embodiments disclosed above for the steps d)-e) and f)-g) of the process of preparing a coated substrate also apply for the coated substrates obtainable by the process of the fourth aspect of the invention.

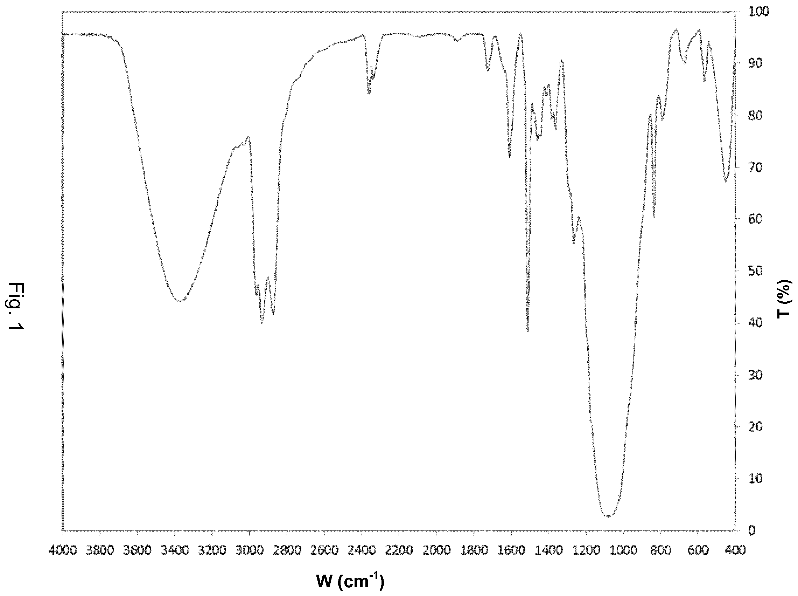

In an embodiment, the coated substrate is a mono-layer coated substrate having a Fourier transform infrared spectroscopy (FTIR) spectrum having peaks at about 3370, 2964, 2935, 2875, 2361, 2342, 1890, 1726, 1610, 1511, 1460, 1411, 1383, 1363, 1266, 1082, 835, 791, 670, 566, 451 ± 4 cm⁻¹; which is obtainable by the process as defined in the first aspect of the invention, wherein the hydrolysable silicon alkoxide is the tetraethylorthosilicate (TEOS) and silicon-organic alkoxide having at least one non-hydrolysable substituent bonded to the silicon atom being the non-hydrolysable substituent other than a substituted or un-substituted (C₁-C₄)alkyl is glycidoxypropyltrimethoxysilane (GPTMS); the organic precursor is bisphenol A (BPA); the hydrolysable metal alkoxide is the zirconium (IV) n-propoxide and the complexion agent is acetyl acetone and the curing step d) is performed at 120°C for 8 hours. In a particular embodiment, the coated substrate is a mono-layer coated substrate having a Fourier transform infrared spectroscopy (FTIR) spectrum as shown in Figure 1; which is obtainable by the process as defined in the first aspect of the invention, wherein the hydrolysable silicon alkoxide is tetraethylorthosilicate (TEOS) and the silicon-organic alkoxide having at least one non-hydrolysable substituent bonded to the silicon atom being the non-hydrolysable substituent other than a substituted or un-substituted (C₁-C₄)alkyl is glycidoxypropyltrimethoxysilane (GPTMS); the organic precursor is bisphenol A (BPA); the metal alkoxide is the zirconium (IV) n-propoxide and the complexion agent is acetyl acetone and the curing step d) is performed at 120°C for 8 hours.

In an embodiment, optionally in combination with one or more features of the various embodiments described above or below, the coated substrate is further characterized by having a X-ray Photoelectron Spectroscopy (XPS) spectrum that comprises characteristic peaks at 183.0, 102.8, 532.6, 531.0, 284.8, 286.6 and 288.4 ±0.15 eV which is obtainable by the process as defined in the first aspect of the invention, wherein the hydrolysable silicon alkoxide is the tetraethylorthosilicate (TEOS) and silicon-organic alkoxide having at least one non-hydrolysable substituent bonded to the silicon atom being the non-hydrolysable substituent other than a substituted or un-substituted (C₁-C₄)alkyl is glycidoxypropyltrimethoxysilane (GPTMS); the organic precursor is bisphenol A (BPA); the hydrolysable metal alkoxide is the zirconium (IV) n-propoxide and the complexion agent is acetyl acetone and the curing step d) is performed at 120°C for 8 hours.

In an embodiment, optionally in combination with one or more features of the various embodiments described above or below, the coated substrate is a mono-layer coated substrate having a Fourier transform infrared spectroscopy (FTIR) spectrum having peaks at about 3370, 2964, 2935, 2875, 2361, 2342, 1890, 1726, 1610, 1511, 1460, 1411, 1383, 1363, 1266, 1082, 835, 791, 670, 566, 451 ± 4 cm⁻¹; and a X-ray Photoelectron Spectroscopy (XPS) spectrum that comprises characteristic peaks at 183.0, 102.8, 532.6, 531.0, 284.8, 286.6 and 288.7 ± 0.15 eV, which is obtainable by the process according to any of the claims 12-14 wherein the hydrolysable silicon alkoxide is tetraethylorthosilicate (TEOS) and the silicon-organic alkoxide having at least one non-hydrolysable substituent bonded to the silicon atom being the non-hydrolysable substituent other than a substituted or un-substituted (C₁-C₄)alkyl is glycidoxypropyltrimethoxysilane (GPTMS); the organic precursor is bisphenol A (BPA); the metal alkoxide is the zirconium (IV) n-propoxide and the complexion agent is acetyl acetone;and the curing step d) is performed at 120°C for 8 hours.

Specifically, the characteristic peaks (expressed in binding energy, eV) of the X-ray photoelectron spectrum as defined above as well as their association with the components of the coating of the invention is shown in Table 12.

**Table 12: List of characteristic peaks acquired using a non-monochromatic X-ray source (Magnesium Kα line, λ = 1253.6 eV and 250 W) operated at 8·10⁻⁸ mbar, with a resolution of 15 eV of pass energy and 0.15 eV/step:**

| Main peaks | Corresponding to | Associated to |
|---|---|---|
| 183.0 eV | Zr 3d_{5/2} | ZrO₂ |
| 102.8 eV | Si 2p | Sub-stoichiometric SiOₓ |
| 532.6 eV | O 1s | C-O and SiOₓ |
| 531.0 eV | O 1s | ZrO₂ |
| 284.8 eV | C 2s | C-C |
| 286.6 eV | C 2s | C-O |
| 288.7 eV | C 2s | C=O |

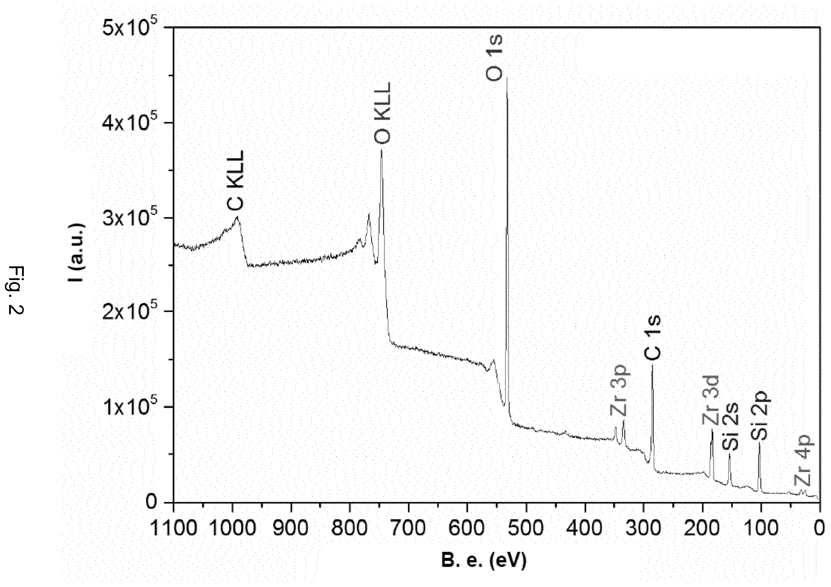

In an embodiment, the coated substrate which is a mono-layer coating of the invention as defined above may be further characterized by having a XPS spectrum as shown in Figure 2.

Specifically, the coated substrate is a mono-layer coated substrate which is obtainable by the process as define in the first aspect of the invention, wherein the hydrolysable silicon alkoxide is the tetraethylorthosilicate (TEOS) and silicon-organic alkoxide having at least one non-hydrolysable substituent bonded to the silicon atom being the non-hydrolysable substituent other than a substituted or un-substituted (C1-C4)alkyl is glycidoxypropyltrimethoxysilane (GPTMS); the organic precursor is bisphenol A (BPA); the hydrolysable metal alkoxide is the zirconium (IV) n-propoxide and the complexion agent is acetyl acetone and the curing step d) is performed at 120°C for 8 hours; is further characterized by having a relative chemical composition expressed in atomic percentage of 3.3% of Zirconium, 19.0% of Silicium, 38.3% of Carbon, and 39.4% of Oxygen.

In comparison with the sol-gel coating compositions of the state of the art, the sol-gel coating composition of the present invention has the appropriate composition for being used in coating processes to obtain durable sol-gel coating composition providing an enhanced corrosion resistant properties and adhesion. And, additionally, as it was mentioned above, the use of the sol-gel coating composition of the invention for coating a substrate is also advantageous because is compatible with the composition of the primers, paints and top-coats commonly used to overcoat the sol-gel corrosion protection coatings.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Furthermore, the present invention covers all possible combinations of particular and preferred embodiments described herein.

### EXAMPLES

### Abbreviation

TEOS: tetraethylorthosilicate
GPTMS: glycidoxypropyltrimethoxysilane
BPA: bisphenol A
AP: allyl phenol
1-MI: 1-methylimidazole
TPOZ: zirconium (IV) n-propoxide
AcAc: acetyl acetone
SDS: sodium dodecyl sulfate

### General consideration

The Fourier transform infrared (FTIR) spectrum. The spectrum was recorded using a resolution of 4 cm⁻¹, aperture 6 mm, and spectral range of 4000-400 cm⁻¹ (2.5-25 µm). The spectrum expresses the transmittance (%) versus wavelength (cm⁻¹). Survey spectrum acquired by X-ray Photoelectron Spectroscopy (XPS). The spectrum was captured by spectrometer with a non-monochromatic X-ray source (Magnesium Kα line of 1253.6 eV energy and 250 W), placed perpendicular to the analyzer axis and calibrated using the 3d_{5/2} line of Ag with a full width at half maximum (FWHM) of 1.1 eV. The selected resolution is 30 eV of Pass Energy and 0.5 eV/step. The measurement was made in an ultra-high vacuum (UHV) chamber at a pressure around 8·10⁻⁸ mbar.

Peak positions were calculated from a higher resolution spectrum acquired in the same conditions as survey spectrum but in which selected resolution is 15 eV of Pass Energy and 0.15 eV/step. Peak positions were calculated by fitting experimental results by means of software CasaXPS V2.3.15dev87.

The relative chemical composition was determined by calculations using software CasaXPS V2.3.15dev87, based on the relative areas and sensitivity factors of the Zr 3d, Si 2p, C 1s and O 1s higher resolution spectrum.

### 1. Sol-gel coating composition

### 1.A- Composition

Tables 1A and 1B show the quantitative components intervening in the preparation of the sol-gel coating compositions of the present invention (Examples 1-10), where the amount of the ingredients is expressed in molar ratio.

**Table 1A**

| **Ingredients** | | | **Examples** | | | | | |
|---|---|---|---|---|---|---|---|---|
| **Sol** | **Description** | **Name** | **1** | **2** | **3** | **4** | **5** | **6** |
| Sol 1 | Hydrolysable silicon alkoxide (a totally hydrolysable silicon alkoxide) | TEOS | 1 | 1 | 1 | 1 | 1 | 1 |
| | Silicon-organic alkoxide having at least one non-hydrolysable substituent bonded to the silicon atom being the non-hydrolysable substituent other than a substituted or un-substituted (C₁-C₄)alkyl | GPTMS | 1 | 1 | 1 | 2 | 2 | 1 |
| | Aqueous solution of an acid catalyst | H₂SO₄ 0.1M | 4 | 4 | 4 | 6 | 6 | 4 |
| | Organic precursor | BPA | 0.5 | 0.5 | 0.5 | 1 | 1 | 0.5 |
| | | AP | | | | | | |
| | Epoxy-ring opening catalyst | 1-MI | - | - | - | - | - | 0.01 |
| | C₁-C₈ alcohol | n-propanol | 2 | 2 | 2 | 2 | 2 | 2 |
| Sol 2 | Hydrolysable Metal alkoxide | TPOZ | 0.40 | 0.40 | 0.40 | 0.60 | 0.60 | 0.40 |
| | Complexion agent | AcAc | 0.57 | 0.57 | 0.57 | 0.85 | 0.85 | 0.57 |
| | Aqueous solution of an acid catalyst | H₂SO₄ 0.1M | 1.13 | 1.13 | 1.13 | 1.71 | 1.71 | 1.13 |
| | C₁-C₈ alcohol | n-propanol | 6.51 | 3.76 | 2.35 | 5.66 | 9.86 | 6.51 |

**Table 1B**

| **Ingredients** | | | **Example** | | | |
|---|---|---|---|---|---|---|
| **Sol** | **Description** | **Name** | **7** | **8** | 9 | 10 |
| Sol 1 | Hydrolysable silicon alkoxide (a totally hydrolysable silicon alkoxide) | TEOS | 1 | 1 | 1 | 1 |
| | Silicon-organic alkoxide having at least one non-hydrolysable substituent bonded to the silicon atom being the non-hydrolysable substituent other than a substituted or un-substituted (C₁-C₄)alkyl | GPTMS | 1 | 1 | 1 | 1 |
| | Aqueous solution of an acid catalyst | H₂SO₄ 0.1M | 4 | 4 | 4 | 4 |
| | Organic precursor | BPA | - | - | - | - |
| | | AP | 1 | 1 | 1 | 1 |
| | Epoxy-ring opening catalyst | 1-MI | 0.01 | - | - | - |
| | C₁-C₈ alcohol | n-propanol | 2 | 2 | 2 | 2 |
| Sol 2 | Hydrolysable Metal alkoxide | TPOZ | 0.40 | 0.40 | 0.40 | 0.40 |
| | Complexion agent | AcAc | 0.57 | 0.57 | 0.57 | 0.57 |
| | Aqueous solution of an acid catalyst | H₂SO₄ 0.1M | 1.13 | 1.13 | 1.13 | 1.13 |
| | C₁-C₈ alcohol | n-propanol | 6.51 | 6.51 | 3.76 | 2.35 |

### 1.B- Comparative Composition

Table 2 shows the quantitative components intervening in the preparation of the comparative sol-gel coating compositions falling outside the scope of the present invention (Comparative Examples 1-2). In particular, comparative Example 1 does not comprise the second sol formed by the hydrolysable metal alkoxide and the complexion agent; meanwhile, comparative Example 2 does not comprise the organic precursor in the first sol.

**Table 2**

| **Ingredients** | | | **Comparative Examples** | |
|---|---|---|---|---|
| **Sol** | **Description** | **Name** | **1** | **2** |
| Sol 1 | Hydrolysable silicon alkoxide (a totally hydrolysable silicon alkoxide) | TEOS | 1 | 1 |
| | Silicon-organic alkoxide having at least one non-hydrolysable substituent bonded to the silicon atom being the non-hydrolysable substituent other than a substituted or un-substituted (C₁-C₄)alkyl | GPTMS | 1 | 1 |
| | Aqueous solution of an acid catalyst | H₂SO₄ 0.1M | 4 | 4 |
| | Organic precursor | BPA | 0.5 | - |
| | Epoxy-ring opening catalyst | MI | - | - |
| | C₁-C₈ alcohol | n-propanol | 8 | 2 |
| Sol 2 | Hydrolysable metal alkoxide | TPOZ | - | 0.40 |
| | Complexion agent | AcAc | - | 0.57 |
| | Aqueous solution of an acid catalyst | H₂SO₄ 0.1M | - | 1.13 |
| | C₁-C₈ alcohol | n-propanol | - | 6.51 |

### 1.C- Preparation Process

### A. General procedure for the preparation of Examples 1-10 of the invention

### Preparation of the first mixture

TEOS, GPTMS, the organic precursor BPA or AP), and optionally 1-MI were mixed in an aqueous solution of H₂SO₄ 0.1M in n-propanol. The resultant solution was stirred during 3 h at 40°C to obtain a first transparent mixture.

### Preparation of the second mixture

Separately and simultaneously, n-propanol was placed in a reactor in which air was replaced by an inert gas (for instance, Ar or N₂ media). Then, a solution of TPOZ of 70% weight in n-propanol and AcAc were introduced in the reactor and stirred during 1 hour. After that time, an aqueous solution of H₂SO₄ 0.1M was added to previous solution and kept stirring for 24 hours. Finally a transparent mixture was obtained.

### Mixture of the first mixture and the second mixture

After the 24 hours, the first sol and the second previously prepared were admixed to form the sol-gel coating compositions of the invention. All sol-gel coating compositions were transparent mixtures.

The amount of the TEOS, GPTMS, BPA (or AP), 1-MI, aqueous solution of H₂SO₄ 0.1M, n-propanol, TPOZ and AcAc used for the preparation of the sol-gel coating composition of the invention (Examples 1-10) are those disclosed in the above mentioned Tables 1A and 1B.

### B. Procedure for the preparation of comparative Examples 1 and 2

### - Comparative Example 1

TEOS, GPTMS and the organic precursor BPA were mixed in an aqueous solution of H₂SO₄ 0.1M in n-propanol media. The resultant solution was stirred during 3 h at 40°C to obtain a transparent mixture.

The amount of the TEOS, GPTMS, BPA, aqueous solution of H₂SO₄ 0.1M, n-propanol used are those disclosed in the above mentioned Table 2.

### - Comparative Example 2

### Preparation of the first mixture

TEOS, GPTMS were mixed in an aqueous solution of H₂SO₄ 0.1M in n-propanol media. The resultant solution was stirred during 3 h at 40°C to obtain a first transparent mixture.

### Preparation of the second mixture

Separately and simultaneously, n-propanol was placed in a reactor in which air was replaced by an inert gas (for instant, Ar or N₂ media). Then, TPOZ and AcAc were introduced in the reactor and stirred during 1 hour. After that time, an aqueous solution of H₂SO₄ 0.1M was added to the previous solution and kept stirring for 24 hours. Finally a transparent mixture is obtained.

### Mixture of the first mixture and the second mixture

After the 24 hours, the first mixture and the second previously prepared were admixed to form the sol-gel coating compositions of the invention. All sol-gel coating compositions are transparent mixtures.

The amount of the TEOS, GPTMS, aqueous solution of H₂SO₄ 0.1M, n-propanol, TPOZ and AcAc used are those disclosed in the above mentioned Table 2.

### 2. Coated substrates

The nomenclature of the aluminium alloys used in the present invention corresponds to the standard of Society of Automotive Engineers (SAE) J993: *Alloy and Temper designation systems for aluminum.*

### 2.A- Preparation Process

### General procedure

### - Pre-treatment of the substrate: Degreasing and cleaning steps

The degreasing, cleaning and preparation of the metal surface to be coated was performed by a first alkaline degreasing treatment optionally followed by a second treatment of acid pickling in order to activate the surface and improve the adherence with the sol-gel coating.

The methods used for performing the alkaline degreasing pre-treatment of the substrate are disclosed below:

### Method A1:

- Introduce substrate in a solution of composition: 45 g/L of Turco 4215 NC LT and 2.5 ml/L of Turco 4215 NC LT at 50°C during 15 min

### Method A2:

- Introduce substrate in a solution of composition: 35g/l of Na₅P₃O₁₀ and 0.5 g/l sodium dodecyl sulfate (SDS) at 80°C during 1.5 min

The method used for performing the pickling pre-treatment of the substrate is disclosed below:

### Method B1:

- Introduce substrate in a solution of composition: 120 g/L of Turco SMUT GO NC and 14.4 ml/L HNO₃ (>65%) at room temperature during 5 min.

### - Coating deposition and curing

The degreased, cleaned and pre-treated substrate obtained in the previous step was introduced in the corresponding sol-gel coating composition of the invention or alternatively, or in the comparative sol-gel coating composition and then, it was withdrawn at a rate comprised from 2 cm/min to 40 cm/min at a temperature comprised from 120°C to 180°C for a period of time comprised from 1h to 8h.

Optionally, the process can further comprise performing additional external coating such as primer layers and top-coat layers. The process for performing the primer layer and the topcoat layer is as follows:

### - Deposition of primer layers

The deposition of two primer layers over the coated substrate obtained in the prior step was carried out by conventionally process to obtain a primed coated substrate. The primers were applied using a conventional air spray gun, to a final thickness that fulfils each manufacturer specifications:
Primer P1: Chromated Polyurethane Primer that fulfils specification: AIMS 04-04-012 (Airbus); recommended thickness 15-20 µm.
Primer P2: Chromate free - Low VOC - Epoxy Primer that fulfils specifications: AIMS 04-04-031 (Airbus), AIMS 04-04-032 (Airbus), DGT 99993 (Dassault); recommended thickness 20-30 µm.

### -Deposition of a top-coat layer

The deposition of a top-coat layer over the primed coated substrate obtained in the prior step was carried out by conventionally process to obtain a top-coated primed coated substrate.

The top-coat (TC1) was applied using a conventional air spray gun, to a final thickness that fulfils manufacturer specifications, 50-75 µm. It is a polyurethane finish that fulfils specifications: AIMS 04.04.012 (Airbus), BAEP 3545 (British Aerospace), DOL 256 (Fairchild Dornier), SMI 70089-1 (Air France), BSX 34 Type B (UK MOD).

### 2.B- Corrosion Test

The corrosion test of the coated substrates of the present invention, either with or without primer or primer/top-coat layer, is performed following one of the following methods:

### - Test of Neutral Salt Spray Fog Test (NSST) disclosed in the ASTM B-117-16.

The samples were tested in a C&W SF/1000/CCT corrosion chamber that met the conditions of the ASTM B 117 standard. According to Section 8.1 and 10.1 of ASTM B117 standard, the salt solution consists of 5±1 parts of NaCl in 95 parts by mass of deionised water and the temperature in the exposure zone shall be maintained at 35±2 °C. Zinc coated steel specimens were supported at 15° while aluminium specimens were supported at 6° from the vertical in accordance with aeronautic specifications MIL-DTL-5541F (page 6, 11 July 2006) and MIL-DTL-81706B:2006 (page 11, 2 May 2006). The borders of all the specimens were masked using a tape in order to cover the edges. In case of primed and top-coated primed specimens, surface has been scribed vertically across the coated surface of each panel, exposing the bare substrate.
- Artificial weathering studied by cyclic UV/Condensation/Dryness test according to Method A of ISO 16474-3:2013(E) disclosed in page 10. Test combined 340 nm-light irradiation with water condensation, water spray and dryness.
- Cyclic Corrosion/Dry/Humidity test according to Cycle B disclosed in the Annex D of ISO 11997-1:2005(E). One cycle combines 24 hours in NSST and 144 h of humidity/dryness in Kesternich chamber. Whole test consisted of 10 cycles.

### 2.C- Primer and top-coat adherence Test

The primer and top-coat adherence tests of the coated substrates of the present invention, which include an external primer layer, or an external primer/topcoat layer, are performed following the test of adherence disclosed in the ISO 2409:2013(E).

The adherence of the sol-gel to the above mentioned primer and top-coat is evaluated by means of cross-cut tape adhesion tests, following the indications of Section 6 in the ISO 2409:2013(E). The test is performed in accordance with ISO 2409:2013(E) using hand-held, multi-blade cutting tool. A lattice pattern with several cuts in each direction is made in the film substrate. Pressure sensitive tape is applied over the lattice and then removed. Evaluation and designation of the results is performed according to Sections 7 and 8 in the ISO 2409:2013(E).

### 2.D- Substrate 1: Aluminium Alloy 2024-T3

### Preparation process

The Table 3 shows the experimental conditions of the process for preparing a coating as defined above over the substrate aluminium alloy 2024-T3 sized 100 x 60 x 1 mm by depositing a sol-gel coating composition of the invention or alternatively a comparative sol-gel coating composition outside the scope of the invention over the substrate.

**Table 3**

| **Coated** | **Pre-treatment** | | **Sol-gel comp** | **Deposition -curing** | **Primer layer (µm)** | **Top-coat (µm)** |
|---|---|---|---|---|---|---|
| | **degreased** | **acid pickling** | | | | |
| 1A | Method A1 | Method B1 | Ex.1 | 15 cm/min | - | - |
| | | | | 120°C (8h) | | |
| 1B | Method A1 | Method B1 | Ex.1 | 15 cm/min | P1 (30µm) | - |
| | | | | 120°C (8h) | | |
| 1C | Method A1 | Method B1 | Ex.1 | 15 cm/min | P1 (30µm) | TC1 (50µm) |
| | | | | 120°C (8h) | | |
| 1D | Method A1 | Method B1 | Ex.1 | 15 cm/min | P2 (27 µm) | - |
| | | | | 120°C (8h) | | |
| Comparative 1E | Method A1 | Method B1 | Comp. Ex 2 | 15 cm/min | - | - |
| | | | | 120°C (8h) | | |
| Comparative 1F | Method A1 | Method B1 | Comp. | 15 cm/min | P1 (30µm) | - |
| | | | Ex 2 | 120°C (8h) | | |
| Comparative 1G | Method A1 | Method B1 | Comp. Ex 2 | 15 cm/min | P1 (30µm) | TC1 (50µm) |
| | | | | 120°C (8h) | | |
| Comparative 1H | Method A1 | Method B1 | Comp. | 15 cm/min | P2 (27 µm) | - |
| | | | Ex 2 | 120°C (8h) | | |

### Corrosion Test:

The results of the corrosion test performed by the Neutral salt Spray Fog Test are shown in the following Table 4.

**Table 4**

| **Coated** | **naked eye assessment** |
|---|---|
| 1A versus comparative 1E | |
| 1A | No corrosion evidence after 168 h of exposure |
| Comparative 1E | Emergence of many pitting points after 168 h of exposure |

| 1B versus comparative 1F | |
|---|---|
| 1B | No evidence of corrosion at least after 3000 h |
| Comparative 1F | Blisters on the surface start appearing after 500 h |

| 1C versus comparative 1G | |
|---|---|
| 1C | No evidence of corrosion at least after 3000 h |
| Comparative 1G | Blisters close to scribe start appearing after 840 h - 1000 h |

| 1D versus comparative 1H | |
|---|---|
| 1D | No primer blistering at least after 2000 h |
| | Black deposits in 10% of the scribe after 1850 h |
| Comparative 1H | Blisters close to scribe start appearing after 670 h and black deposits in 30 % of the scribe after 1000 h |
| | White deposits in 45 % of the scribe after 1000 h |
| | White draining from the scribe after 1000 h |

Adherence Test: The results of the adherence test following the method as defined above are shown in Table 5.

**Table 5**

| **Coated** | **naked eye assessment** |
|---|---|
| 1B | Score 0 |
| 1C | Score 0 |
| 1D | Score 0 |
| Comparative 1F | Score 0 |
| Comparative 1G | Score 0 |
| Comparative 1H | Score 0 |

Score 0 refers to the fact that the edge of the cut are completely smooth; none of the squares lattice is detached.

### 2.E- Substrate 2: Aluminium Alloy 7075-T6

### Preparation process

Table 6 shows the experimental conditions of the process for preparing a coating as defined above over the substrate AA7075-T6 sized 100 x 60 x 1 mm by depositing a sol-gel coating composition of the invention or alternative, a comparative sol-gel coating composition outside the scope of the invention over the substrate

**Table 6**

| **Coated** | **Pre-treatment** | | **Sol-gel comp** | **Deposition -curing** |
|---|---|---|---|---|
| | **alkaline degreasing** | **acid pickling** | | |
| 2A | Method A1 | Method B1 | Ex.6 | 15 cm/min |
| | | | | 120°C (8h) |
| Comparative 2B | Method A1 | Method B1 | Comparative Ex 2 | 15 cm/min |
| | | | | 120°C (8h) |

### Corrosion Test:

The results of the corrosion test performed by the Neutral salt Spray Fog Test are shown in the following Table 7.

**Table 7**

| **Coated** | **naked eye assessment** |
|---|---|
| 2A | No corrosion evidence after 168 h of exposure, and emergence of salt deposits onto surface after 336 h of exposure |
| Comparative 2B | Pitting points and generalized corrosion products after 168 h of exposure |

### 2.F- Substrate 3: Aluminium Alloy 6082-T6

### Preparation process

Table 8 shows the experimental conditions of the process for preparing a coating as defined above over the substrate AA6082-T6 sized 75 x 25 x 1 mm by depositing a sol-gel coating composition of the invention or alternatively, a comparative sol-gel coating composition outside the scope of the invention over the substrate.

**Table 8**

| **Coated** | **Pre-treatment** | | **Sol-gel comp** | **Deposition -curing** |
|---|---|---|---|---|
| | **alkaline degreasing** | **acid pickling** | | |
| 3A | Method A1 | Method B1 | Ex.1 | 15 cm/min 180°C (1h) |
| Comparative 3B | Method A1 | Method B1 | Comparative Ex 1 | 15 cm/min 180°C (1h) |
| Comparative 3C | Method A1 | Method B1 | Comparative Ex 2 | 15 cm/min 180°C (1h) |

### Corrosion Test:

The results of the corrosion test performed by the Neutral Salt Spray Test are shown in the following Table 9.

**Table 9**

| **Coated** | **naked eye assessment** | **Scanning Electron Microscope analysis** |
|---|---|---|
| 3A | No evidence of corrosion at least after 500 h | Coating after 500 h in NSST is still homogeneous and continuous |
| Comparative 3B | Black corrosion deposits appear after 168 h | |
| Comparative 3C | No evidence of corrosion at least after 500 h. | Coating after 500 h in NSST is cracked. |

### 2.G- Substrate 4: Zinc coated steel

### Preparation process

Table 10 shows the experimental conditions of the process for preparing a coating as defined above over different galvanised steel substrates sized 100 x 60 x 1 mm by depositing the sol-gel coating composition of Example 1 of the invention over the substrate.

**Table 10**

| **Coated** | **Substrate type** | **Pre-treatment (alkaline degreasig)** | **Sol-gel comp** | **Deposition -curing** |
|---|---|---|---|---|
| 4A | HDG^{(a)} | Method A2 | Ex.1 | 2 cm/min 180°C (1h) |
| 4A | Electrolytic Zn^{(b)} | Method A2 | Ex.1 | 2 cm/min 180°C (1h) |

| | | | | |
|---|---|---|---|---|
| (a) HDG refers to hot dip galvanised steel, which has a Zn thickness of about 17 µm (b) Electrolytic Zn refers to a zinc-coated steel by a electrolytic process, which has a Zn thickness of about 14 µm | | | | |

Corrosion Test: The results of the corrosion tests are shown in the following Table 11.

**Table 11**

| **Coated substrate number/Substrate type** | **Corrosion / Artificial weathering tests** | | |
|---|---|---|---|
| | **Neutral salt Spray Fog Test** | **Cyclic UV/Condensation/Dryness test** | **Cyclic Corrosion/Dry/Humidity test** |
| 4A/H DG | Evidence of Zn corrosion after 1200 h, and evidence of Steel corrosion after 1850 h. | No corrosion after test (1000 h) 12% of gloss loss | No corrosion evidence after 10 cycles of the test |
| | | ΔE=3.7 | |
| 4A/Electrolytic Zn | Evidence of Zn corrosion after 1200 h, and evidence of Steel corrosion after 1200 h. | No corrosion after test (1000 h) 12% of gloss loss | No corrosion after test (10 cycles) |
| | | ΔE=13.3 | |

### 3. Comparative sol-gel coating composition

### 3.1. Composition

Table 12 shows the quantitative components intervening in the preparation of the comparative sol-gel coating compositions falling outside the scope of the present invention (Comparative Examples 3-6). In particular, comparative Examples 3-6 do not comprise both a silicon-organic alkoxide having at least one non-hydrolysable substituent bonded to the silicon atom being the non-hydrolysable substituent other than a substituted or un-substituted (C₁-C₄)alkyl and an organic precursor falling within the scope of the present invention.

**Table 12**

| **Ingredients** | | | **Comparative Examples** | | | |
|---|---|---|---|---|---|---|
| **Sol** | **Description** | **Name** | **3** | **4** | **5** | **6** |
| Sol 1 | Hydrolysable silicon alkoxide (a totally hydrolysable silicon alkoxide) | TEOS | 1 | 1 | 1 | 1 |
| | Silicon-organic alkoxide having at least one non-hydrolysable substituent bonded to the silicon atom being the non-hydrolysable substituent other than a substituted or un-substituted (C₁-C₄)alkyl | MAPTMS^{(a)} | 1 | 1 | 1 | 1 |
| | | GPTMS | - | - | - | - |
| | Aqueous solution of an acid catalyst | H₂SO₄0.1M | 4 | 4 | 4 | 4 |
| | Organic precursor | EGDMA^{(b)} | 0.14 | 0.14 | 0.5 | 0.5 |
| | Epoxy-ring opening catalyst | AlBN^{(c)} | 0.013 | 0.013 | 0.020 | 0.020 |
| | C₁-C₈ alcohol | n-propanol | 2 | 2 | 2 | 2 |
| Sol 2 | Hydrolysable metal alkoxide | TPOZ | 0.40 | 0.40 | 0.40 | 0.40 |
| | Complexion agent | AcAc | 0.57 | 0.57 | 0.57 | 0.57 |
| | Aqueous solution of an acid catalyst | H₂SO₄ 0.1M | 1.13 | 1.13 | 1.13 | 1.13 |
| | C₁-C₈ alcohol | n-propanol | 6.51 | 3.76 | 6.51 | 3.76 |

| | | | | | | |
|---|---|---|---|---|---|---|
| ^{(a)} MAPTMS refers to a methacryloxypropyltrimethoxysilane ^{(b)} EGDMA refers to Ethylene glycol dimethacrylate ^{(c)} AIBN refers to 2,2'-azobisisobutyronitrile | | | | | | |

### 3.2. Preparation process

The comparative sol-gel coating composition of comparative Examples 3-6 were prepared following the process as defined above in section 1C but using the ingredients specified in Table 12.

### 3.3. Comparative coated substrates

### Preparation process

Table 13 shows the experimental conditions of the process for preparing a coating over the substrate aluminium alloy as defined in the general procedure of section 2A but depositing the comparative sol-gel coating composition of comparative Examples 3-6 as defined above falling outside of the scope of protection over a substrate aluminium alloy 2024-T3 sized 75 x 25 x 1 mm.

**Table 13**

| **Coated** | **Pre-treatment** | | **Sol-gel comp** | **Deposition -curing** | **Primer layer (µm)** | **Topcoat (µm)** |
|---|---|---|---|---|---|---|
| | **degreased** | **acid pickling** | | | | |
| Comparative 1I | Method A1 | Method B1 | Comp. Ex 3 | 15 cm/min 120°C (2h) | - | - |
| Comparative 1J | Method A1 | Method B1 | Comp. Ex 4 | 15 cm/min 120°C (2h) | - | - |
| Comparative 1K | Method A1 | Method B1 | Comp. Ex 5 | 15 cm/min 120°C (2h) | -- | - |
| Comparative 1L | Method A1 | Method B1 | Comp. Ex 6 | 15 cm/min 120°C (2h)) | - | - |
| Comparative 1M | Method A1 | Method B1 | Comp. Ex 6 | 15 cm/min 120°C (8h)) | - | - |

### Corrosion Test

The results of the corrosion test performed by the Neutral salt Spray Fog Test are shown in the following Table 14.

**Table 4**

| **Coated** | **naked eye assessment** |
|---|---|
| 1A versus comparatives 11, 1J, 1K, 1L, 1M | |
| 1A | No corrosion evidence after 168 h of exposure |
| Comparative 1I | Extended and generalised corrosion; many pitting points; white and black corrosion deposits after 168 h of exposure |
| Comparative 1J | Extended and generalised corrosion; many pitting points; white and black corrosion deposits after 168 h of exposure |
| Comparative 1K | Extended and generalised corrosion; many pitting points; white, black and red corrosion deposits after 168 h of exposure |
| Comparative 1L | Extended and generalised corrosion; many pitting points; white, black and red corrosion deposits after 168 h of exposure |
| Comparative 1 M | Several pitting points, white and black corrosion deposits as well as drained corrosion products after 168 h of exposure |

The above mentioned results clearly show that in comparison with the sol-gel coating compositions which does not contain the specific combination of ingredients of the present invention, particularly the combination of the silicon-organic alkoxide having at least one non-hydrolysable substituent bonded to the silicon atom being the non-hydrolysable substituent other than a substituted or un-substituted (C₁-C₄)alkyl is a compound of formula (III) with an organic precursor precursor falling within the scope of the present invention prevent forming corrosion defects over coating in a wide variety of substrates.

### 4. Conclusion

The above mentioned results clearly show that in comparison with the sol-gel coating compositions disclosed in the state of the art, the sol-gel coating on a substrate obtainable by the deposition of the sol-gel coating compositions of the present invention prevent or avoid forming corrosion defects over coating in a wide variety of substrates. This fact can be attributed to the effect of the interfacial corrosion, particularly by increasing the adhesion between the sol-gel coating compositions and the substrate, so as to the development of a highly dense material formed by silica and zirconia networks entrapped with chemically bonded polymeric compositions that enhances flexibility and permits to deposit coatings free of residual stress curable at lower temperatures. It is caused by the use of a sol-gel coating composition of the present invention obtainable by the specific mixture of a first sol having a at least one hydrolysable silicon alkoxide and at least one silicon-organic alkoxide having at least one non-hydrolysable substituent bonded to the silicon atom being the non-hydrolysable substituent other than a substituted or un-substituted (C₁-C₄)alkyl, in combination with an aqueous solution of an acid catalyst, and at least an organic precursor; with a second sol having at least one hydrolysable metal alkoxide, a complexion agent, and at least an aqueous solution of at least an acid catalyst as it is defined above.

Furthermore, the above mentioned results also show that the use of the sol-gel coating compositions of the invention further increase the corrosion resistance of the coating obtained by the deposition of the sol-gel coating compositions of the invention because also is compatible with the addition of external primer layer or topcoat layers. As a consequence, the use of the sol-gel coating compositions of the present invention leads to obtain sol-gel coatings on substrates that have lower corrosion velocity are therefore, showing highly resistant to corrosion and durability properties.

### REFERENCES CITED IN THE APPLICATION

1. ASTM B-117-16. Test of Neutral Salt Spray Fog Test (NSST).
2. MIL-DTL-5541F (11 July 2006). Chemical conversion coatings on aluminum and aluminum alloys. Page 6.
3. MIL-DTL-81706B (2 May 2006). Chemical conversion materials for coating aluminum and aluminum alloys. Page 11.
4. ISO 16474-3:2013(E). Paints and varnishes - Methods of exposure to laboratory light sources - Part 3: Fluorescent UV lamps. Page 10.
5. ISO 11997-1:2005(E). Paints and varnishes - Determination of resistance to cyclic corrosion conditions - Part 1: Wet (salt fog)/dry/humidity. Annex D.
6. ISO 2409:2013(E). Paints and varnishes - Cross-cut test. Sections 6, 7 and 8.

## Claims

1. A process for preparing a sol-gel coating composition comprising:
a) providing a first sol obtainable by a process which comprises:
a1) first mixing at least one hydrolysable silicon alkoxide and at least one silicon-organic alkoxide having at least one non-hydrolysable substituent bonded to the silicon atom being the non-hydrolysable substituent other than a substituted or un-substituted (C₁-C₄)alkyl with one or more C₁-C₈ alcohols;
a2) preparing a second mixture by mixing an aqueous solution of at least one acid catalyst having a pH lower than 5, at least one organic precursor, one or more C₁-C₈ alcohols and optionally at least one epoxy-ring opening catalyst;
a3) adding the second mixture obtained in step a2) to the resulting mixture of step a1); and stirring the resulting mixture at a temperature comprised from 35°C to 45°C for an appropriate period of time to obtain the first sol;
b) providing a second sol obtainable by a process which comprises:
b1) first mixing at least one hydrolysable metal alkoxide with one or more C₁-C₈ alcohols under an inert and dry atmosphere;
b2) adding a complexion agent to the resultant mixture obtained in step b1); and stirring the resultant mixture for an appropriate period of time;
b3) adding an aqueous solution of at least one acid catalyst having a pH lower than 7 to the resulting mixture obtained in step b2) and stirring the resulting mixture at a temperature comprised from 15 °C to 30 °C for an appropriate period of time to obtain the second sol;
wherein the metal atom in the hydrolysable metal alkoxide is selected from the group consisting of Ti, Zr, Al, B, Sn and V; and
c) mixing the first sol with the second sol, and ageing the resulting mixture by stirring at a temperature comprised from 15°C to 30°C for a period of time comprised from 24h to 72h;
wherein the silicon-organic alkoxide having at least one non-hydrolysable substituent bonded to the silicon atom being the non-hydrolysable substituent other than a substituted or un-substituted (C₁-C₄)alkyl is a compound of formula (III)
R⁹-(CH₂)ₘ-Si(OR¹⁰)(OR¹¹)(OR¹²) (III)
wherein:
by non-hydrolysable substituent bonded to the silicon atom is understood an epoxide alkyl moiety bonded to the silicon atom by a Si-C bond which is non-hydrolysable at this position, and wherein in compound of formula (III) such substituent is R⁹(CH₂)m-;
and
each one of R¹⁰, R¹¹ and R¹² are independently selected from the group consisting of a substituted or un-substituted (C₁-C₁₄)alkyl, (C₅-C₆)aryl, (C₂-C₁₄)alkenyl, and (C₂-C₁₄)alkyl-CH=CH-; m is an integer comprised from 0 to 20; and R⁹ is a compound of formula (V) 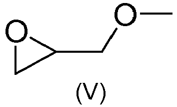
and the organic precursor is selected from the group consisting of:
a bisphenol compound of formula (VI) 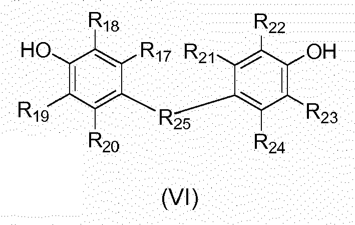 wherein:
R₁₇, R₁₈, R₁₉, R₂₀, R₂₁, R₂₂, R₂₃ and R₂₄ are independently selected from the group consisting of H, substituted or un-substituted (C1-C6)alkyl, (C₅-C₆)aryl, (C₂-C₁₄)alkenyl, and (C₂-C₁₄)alkyl-CH=CH- and substituted or un-substituted phenyl;
R₂₅ is selected from the group consisting of CR₂₆R₂₇, SO₂, a compound of formula (VII) 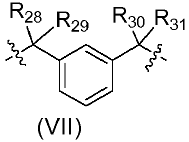 and a compound of formula (VIII) 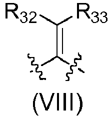
R₂₆ and R₂₇ are independently selected from the group consisting of H, substituted or un-substituted (C₁-C₆)alkyl, (C₅-C₆)aryl, (C₂-C₁₄)alkenyl, (C₂-C₁₄)alkyl-CH=CH-, and substituted or un-substituted phenyl;
R₂₈, R₂₉, R₃₀ and R₃₁ are independently selected from the group consisting of H, and substituted or un-substituted (C₁-C₆)alkyl, (C₅-C₆)aryl, (C₂-C₁₄)alkenyl, and (C₂-C₁₄)alkyl-CH=CH-; and
R₃₂ and R₃₃ are independently selected from the group consisting of halogen and substituted or un-substituted (C₁-C₆)alkyl, (C₅-C₆)aryl, (C₂-C₁₄)alkenyl, and (C₂-C₁₄)alkyl-CH=CH-;
a substituted phenol of formula (IX) 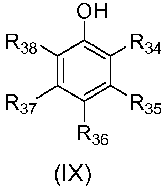
wherein: R₃₄, R₃₅, R₃₆, R₃₇ and R₃₈ are independently selected from the group consisting of a H, substituted or un-substituted (C₁-C₁₄)alkyl, (C₅-C₆)aryl, (C₂-C₁₄)alkenyl, and (C₂-C₁₄)alkyl-CH=CH, being at least one of R₃₄, R₃₅, R₃₆, R₃₇ and R₃₈ other than H;
a compound of formula (X) 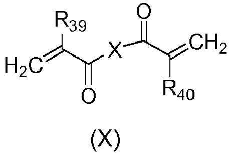
wherein:
R₃₉ and R₄₀ are independently selected from the group consisting of H and (C₁-C₆)alkyl; and
X is selected from the group consisting of a compound of formula (XI) 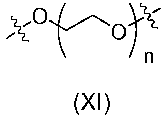
wherein n is an integer from 1 to 6;
and a compound of formula (XII); 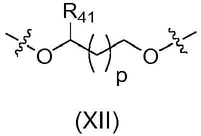
wherein: R₄₁ is selected from the group consisting of H and (C₁-C₆)alkyl and p is an integer from 1 to 8;
and mixture thereof.

2. The process according to claim 1, wherein the organic precursor is selected form the group consisting of a bisphenol compound of formula (VI), a substituted phenol of formula (IX) and mixture thereof.

3. The process according to any of the claims 1-2, firstly, carrying out steps a1)-a3) for preparing the first sol and secondly, carrying out steps b1)-b3) for preparing the second sol; and subsequently carrying out step c).

4. The process according to any of the claims 1-3, wherein the acid catalyst is an inorganic acid independently selected from the group consisting of H₂SO₄, HCI, HNO₃, and mixtures thereof; and the C₁-C₈ alcohol is independently selected from the group consisting of ethanol, butanol, propanol, and mixtures thereof.

5. The process according to any of the claims 1-4, wherein the hydrolysable silicon alkoxide is selected from the group consisting of:
i) a totally hydrolysable silicon alkoxide of formula (I);
Si(OR¹)(OR²)(OR³)(OR⁴) (I)
ii) an alkylalkoxide having at least one non-hydrolysable substituent being the non-hydrolysable substituent a substituted or un-substituted (C₁-C₄)alkyl of formula (II):
R⁸-Si(OR⁵)(OR⁶)(OR⁷) (II)
iii) an alkenylalkoxide having at least one non-hydrolysable substituent being the non-hydrolysable substituent a substituted or un-substituted (C₁-C₄)alkyl of formula (II):
R^{x}-Si(OR⁵)(OR⁶)(OR⁷) (II')
iv) a mixture of at least a totally hydrolysable silicon alkoxide of formula (I) and at least an alkylalkoxide having at least one non-hydrolysable substituent being the non-hydrolysable substituent a substituted or un-substituted (C₁-C₄)alkyl of formula (II);
and
v) a mixture of at least a totally hydrolysable silicon alkoxide of formula (I) and at least an alkenylalkoxide having at least one non-hydrolysable substituent being the non-hydrolysable substituent a substituted or un-substituted (C₁-C₄)alkyl of formula (II');
wherein:
each one of R¹, R², R³, R⁴, R⁵, R⁶ and R⁷ are independently selected from the group consisting of a substituted or un-substituted (C₁-C₁₄)alkyl, (C₅-C₆)aryl, (C₂-C₁₄)alkenyl and (C₂-C₁₄)alkynyl group; and
R⁸ is a substituted or un-substituted (C₁-C₄)alkyl; and
R^{x} is a substituted or un-substituted (C₂-C₁₄)alkenyl.

6. The process according to any of the claims 1-5, wherein the hydrolysable silicon alkoxide is selected from the group consisting of:
i) a totally hydrolysable silicon alkoxide of formula (I);
Si(OR¹)(OR²)(OR³)(OR⁴) (I)
ii) an alkylalkoxide having at least one non-hydrolysable substituent being the non-hydrolysable substituent a substituted or un-substituted (C₁-C₄)alkyl of formula (II):
R⁸-Si(OR⁵)(OR⁶)(OR⁷) (II)
and
iii) a mixture of at least a totally hydrolysable silicon alkoxide of formula (I) and at least an alkylalkoxide having at least one non-hydrolysable substituent being the non-hydrolysable substituent a substituted or un-substituted (C₁-C₄)alkyl of formula (II);
wherein:
each one of R¹, R², R³, R⁴, R⁵, R⁶ and R⁷ are independently selected from the group consisting of a substituted or un-substituted (C₁-C₁₄)alkyl, (C₅-C₆)aryl, (C₂-C₁₄)alkenyl and (C₂-C₁₄)alkynyl group; and
R⁸ is a substituted or un-substituted (C₁-C₄)alkyl.

7. The process according to any of the claims 1-6, wherein the at least one epoxy-ring opening catalyst is 1-methylimidazole (1-MI).

8. The process according to any of the claims 1-7, wherein the hydrolysable metal alkoxide is a compound of formula (IV):
(OR¹³)(OR¹⁴)(OR¹⁵)(OR¹⁶)Metal (IV)
wherein each one of R¹³, R¹⁴, R¹⁵ and R¹⁶ are independently selected from the group consisting of substituted or un-substituted (C₁-C₁₄)alkyl, (C₅-C₆)aryl, (C₂-C₁₄)alkenyl and (C₂-C₁₄)alkynyl group and the metal atom is as defined in claim 1.

9. The process according to any of the claims 1-8, wherein the complexion agent is selected from the group consisting of acetyl acetone, methacrylic acid, acetic acid, isobutyric acid, bipyridine, and mixtures thereof.

10. A sol-gel coating composition obtainable by the process as defined in any of the claims 1-9.

11. A process for preparing a coated substrate comprising:
d) depositing the sol-gel coating composition as defined in claim 10 over the substrate; and
e) curing the coating obtained in step d).

12. The process according to claim 11, wherein step d) is performed by dipping the substrate in the coating composition at a deposition rate comprised from 2 cm/min to 40 cm/min.

13. The process according to any of the claims 11-12, wherein step e) is performed by submitting the coated substrate obtained in step d) at a temperature comprised from 80°C to 220°C for an appropriate period of time.

14. A coated substrate obtainable by the process as defined in any of the claims 11-13.

15. The coated substrate according to claim 14, wherein the coating is a mono-layer coated substrate having; a Fourier transform infrared spectroscopy (FTIR) spectrum having peaks at 3370, 2964, 2935, 2875, 2361, 2342, 1890, 1726, 1610, 1511, 1460, 1411, 1383, 1363, 1266, 1082, 835, 791, 670, 566, 451 ± 4 cm⁻¹; and a X-ray Photoelectron Spectroscopy (XPS) spectrum that comprises characteristic peaks at 183.0, 102.8, 532.6, 531.0, 284.8, 286.6 and 288.7 ± 0.15 eV; wherein the spectra were recorded according to the relevant method detailed in the description; which is obtainable by the process according to any of the claims 11-13 wherein the hydrolysable silicon alkoxide is tetraethylorthosilicate (TEOS) and the silicon-organic alkoxide having at least one non-hydrolysable substituent bonded to the silicon atom being the non-hydrolysable substituent other than a substituted or un-substituted (C₁-C₄)alkyl is glycidoxypropyltrimethoxysilane (GPTMS); the organic precursor is bisphenol A (BPA); the metal alkoxide is the zirconium (IV) n-propoxide and the complexion agent is acetyl acetone;and the curing step d) is performed at 120°C for 8 hours.

## Patentansprüche

1. Ein Verfahren zur Herstellung einer Sol-Gel-Beschichtungszusammensetzung umfassend:
a) Bereitstellen von einem ersten Sol, das mittels eines Verfahrens gewonnen werden kann, das folgendes umfasst:
a1) zunächst das Mischen von mindestens einem hydrolysierbaren Siliciumalkoxid und mindestens einem Organosiliciumalcoxid, das mindestens einen nicht hydrolysierbaren Substituenten hat, der an das Siliciumatom gebunden ist, wobei der nicht hydrolysierbare Substituent verschieden von einem substituierten oder nichtsubstituierten (C₁-C₄)-Alkyl mit einem oder mehreren (C₁-C₈)-Alkoholen ist;
a2) Herstellen von einer zweiten Mischung, indem eine wässrige Lösung von mindestens einem sauren Katalysator, der einen pH-Wert unter 5 hat, mindestens einem organischen Präkursor, einem oder mehreren (C₁-C₈)-Alkoholen und, wahlweise, mindestens einem Epoxidringöffnungskatalysator gemischt werden;
a3) Hinzufügen der im Schritt a2) erhaltenen zweiten Mischung der aus dem Schritt a1) resultierenden Mischung; und das Rühren der resultierenden Mischung bei einer Temperatur von 35°C bis 45°C während eines geeigneten Zeitraums, um das erste Sol zu erhalten;
b) Bereitstellen von einem zweiten Sol, das mittels eines Verfahrens gewonnen werden kann, das folgendes umfasst:
b1) zunächst das Mischen von mindestens einem hydrolysierbaren Metallalkoxid mit einem oder mehreren (C₁-C₈)-Alkoholen unter einer inerten und trockenen Atmosphäre;
b2) Hinzugeben von einem Komplexbildner der aus dem Schritt b1) resultierenden Mischung; und das Rühren der resultierenden Mischung während eines geeigneten Zeitraums;
b3) Hinzufügen von einer wässrigen Lösung von mindestens einem sauren Katalysator, der einen pH-Wert geringer als 7 hat, der aus dem Schritt b2) resultierenden Mischung und das Rühren der resultierenden Mischung bei einer Temperatur, die von 15 °C bis 30 °C reicht, während eines geeigneten Zeitraums, um das zweite Sol zu erhalten;
wobei das Metallatom im hydrolysierbaren Metallalkoxid ausgewählt aus der Gruppe bestehend aus Ti, Zr, AI, B, Sn und V ist; und
c) Mischen des ersten Sols mit dem zweiten Sol und die Reifung der resultierenden Mischung durch Rührung bei einer Temperatur, die von 15 °C bis 30 °C reicht, während eines Zeitraums, der von 24 Stunden bis 72 Stunden reicht;
wobei das Organosiliciumalkoxid, das mindestens einen an das Siliciumatom gebundenen nicht hydrolysierbaren Substituenten hat, wobei der nicht hydrolysierbare Substituent verschieden von einem substituierten oder nicht substituierten (C₁-C₄)-Alkyl ist, eine Verbindung der Formel (III) ist
R⁹-(CH₂)ₘ-Si(OR¹⁰)(OR¹¹)(OR¹²) (III)
wobei:
ein an das Silicium gebundener nicht hydrolysierbarer Substituent hier ein Epoxidalkylradikal bedeutet, das an das Siliciumatom durch eine Si-C-Bindung gebunden ist, welches an diese Stelle nicht hydrolysierbar ist, und wobei in der Verbindung der Formel (III) dieser Substituent R⁹(CH₂)m- ist;
und
wobei jedes von R¹⁰, R¹¹ und R¹² unabhängig voneinander ausgewählt ist aus der Gruppe bestehend aus einem substituierten oder nicht substituierten (C₁-C₁₄)-Alkyl, (C₅-C₆)-Aryl, (C₂-C₁₄)-Alkenyl, und (C₂-C₁₄)-Alkyl-CH=CH-; m eine Ganzzahl ist, die von 0 bis 20 reicht, und R⁹ eine Verbindung der Formel (V) ist 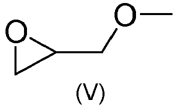 wobei der organische Präkursor ausgewählt ist aus der Gruppe bestehend aus:
einer Bisphenolverbindung der Formel (VI) 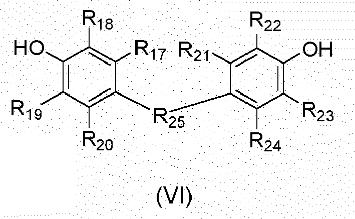 wobei:
R₁₇, R₁₈, R₁₉, R₂₀, R₂₁, R₂₂, R₂₃ und R₂₄ unabhängig voneinander ausgewählt sind aus der Gruppe bestehend aus H, substituiertem oder nicht substituiertem (C₁-C₆)-Alkyl, (C₅-C₆)-Aryl, (C₂-C₁₄)-Alkenyl, und (C₂-C₁₄)-Alkyl-CH=CH- und substituiertem oder nicht substituiertem Phenyl;
R₂₅ ausgewählt ist aus der Gruppe bestehend aus CR₂₆R₂₇, SO₂, einer Verbindung der Formel (VII) 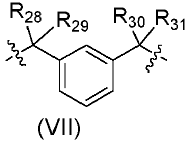
und einer Verbindung der Formel (VIII) 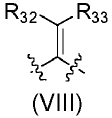
R₂₆ und R₂₇ unabhängig voneinander ausgewählt sind aus der Gruppe bestehend aus H, substituiertem oder nicht substituiertem (C₁-C₆)-Alkyl, (C₅-C₆)-Aryl, (C₂-C₁₄)-Alkenyl, (C₂-C₁₄)-Alkyl-CH=CH-, und substituiertem oder nicht substituiertem Phenyl;
R₂₈, R₂₉, R₃₀ und R₃₁ unabhängig voneinander ausgewählt sind aus der Gruppe bestehend aus H, und substituiertem oder nicht substituiertem (C₁-C₆)-Alkyl, (C₅-C₆)-Aryl, (C₂-C₁₄)-Alkenyl, und (C₂-C₁₄)-Alkyl-CH=CH-; und
R₃₂ und R₃₃ unabhängig voneinander ausgewählt sind aus der Gruppe bestehend aus Halogen und substituiertem oder nicht substituiertem (C₁-C₆)-Alkyl, (C₅-C₆)-Aryl, (C₂-C₁₄)-Alkenyl, und (C₂-C₁₄)-Alkyl-CH=CH-;
einem substituierten Phenol der Formel (IX) 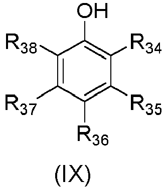
wobei: R₃₄, R₃₅, R₃₆, R₃₇ und R₃₈ unabhängig voneinander ausgewählt sind aus der Gruppe bestehend aus H, substituiertem oder nicht substituiertem (C₁-C₁₄)-Alkyl, (C₅-C₆)-Aryl, (C₂-C₁₄)-Alkenyl, und (C₂-C₁₄)-Alkyl-CH=CH, wobei mindestens eines von R₃₄, R₃₅, R₃₆, R₃₇ und R₃₈ verschieden von H ist;
einer Verbindung der Formel (X) 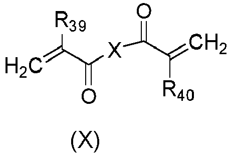
wobei:
R₃₉ und R₄₀ unabhängig voneinander ausgewählt sind aus der Gruppe bestehend aus H und (C₁-C₆)-Alkyl; und
X ausgewählt ist aus der Gruppe bestehend aus einer Verbindung der Formel (XI) 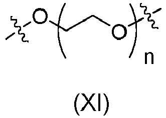
wobei n eine Ganzzahl von 1 bis 6 ist;
und einer Verbindung der Formel (XII); 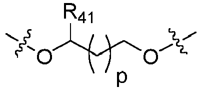 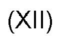
wobei: R₄₁ ausgewählt aus der Gruppe bestehend aus H und (C₁-C₆)-Alkyl und p eine Ganzzahl von 1 bis 8 ist;
und Mischungen davon.

2. Das Verfahren nach Anspruch 1, wobei der organische Präkursor ausgewählt aus der Gruppe bestehend aus einer Bisphenolverbindung der Formel (VI), einem substituierten Phenol der Formel (IX) und Mischungen davon ist.

3. Das Verfahren nach einem der Ansprüche 1-2, wobei erstens die Schritte a1)-a3) zur Herstellung des ersten Sols und zweitens die Schritte b1)-b3) zur Herstellung des zweiten Sols durchgeführt werden; und danach der Schritt c) durchgeführt wird.

4. Das Verfahren nach einem der Ansprüche 1-3, wobei der saure Katalysator eine anorganische Säure ist, die unabhängig ausgewählt ist aus der Gruppe bestehend aus H₂SO₄, HCl, HNO₃, und Mischungen davon; und wobei der (C₁-C₈)-Alkohol unabhängig ausgewählt ist aus der Gruppe bestehend aus Ethanol, Butanol, Propanol und Mischungen davon.

5. Das Verfahren nach einem der Ansprüche 1-4, wobei das hydrolysierbare Silicium-Alkoxid ausgewählt ist aus der Gruppe bestehend aus:
i) einem vollständig hydrolysierbaren Silicium-Alkoxid der Formel (I);
Si(OR¹)(OR²)(OR³)(OR⁴) (I)
ii) einem Alkylalkoxid, das mindestens einen nicht hydrolysierbaren Substituenten hat, wobei der nicht hydrolysierbare Substituent ein substituiertes oder nicht substituiertes (C₁-C₄)-Alkyl der Formel (II) ist:
R⁸-Si(OR⁵)(OR⁶)(OR⁷) (II)
iii) einem Alkenylalkoxid, das mindestens einen nicht hydrolysierbaren Substituenten hat, wobei der nicht hydrolysierbare Substituent ein substituiertes oder nicht substituiertes (C₁-C₄)-Alkyl der Formel (II) ist:
R^{X}-Si(OR⁵)(OR⁶)(OR⁷) (II')
iv) einer Mischung aus mindestens einem vollständig hydrolysierbaren Siliciumalkoxid der Formel (I) und mindestens einem Alkylalkoxid, das mindestens einen nicht hydrolysierbaren Substituenten hat, wobei der nicht hydrolysierbare Substituent ein substituiertes oder nicht substituiertes (C₁-C₄)-Alkyl der Formel (II) ist;
und
v) einer Mischung aus mindestens einem vollständig hydrolysierbaren Siliciumalkoxid der Formel (I) und mindestens einem Alkenylalkoxid, das mindestens einen nicht hydrolysierbaren Substituenten hat, wobei der nicht hydrolysierbare Substituent ein substituiertes oder nicht substituiertes (C₁-C₄)-Alkyl der Formel (II') ist;
wobei:
jedes R¹, R², R³, R⁴, R⁵, R⁶ und R⁷ unabhängig voneinander ausgewählt ist aus der Gruppe bestehend aus einer substituierten oder nicht substituierten (C₁-C₁₄)-Alkyl-, (C₅-C₆)-Aryl-, (C₂-C₁₄)-Alkenyl- und (C₂-C₁₄)-Alkynylgruppe; und
R⁸ ein substituiertes oder nicht substituiertes (C₁-C₄)-Alkyl ist; und
R^{x} ein substituiertes oder nicht substituiertes (C₂-C₁₄)-Alkenyl ist.

6. Das Verfahren nach einem der Ansprüche 1-5, wobei das hydrolysierbare Silicium-Alkoxid ausgewählt ist aus der Gruppe bestehend aus:
i) einem vollständig hydrolysierbaren Silicium-Alkoxid der Formel (I);
Si(OR¹)(OR²)(OR³)(OR⁴) (I)
ii) einem Alkylalkoxid, das mindestens einen nicht hydrolysierbaren Substituenten hat, wobei der nicht hydrolysierbare Substituent ein substituiertes oder nicht substituiertes (C₁-C₄)-Alkyl der Formel (II) ist:
R⁸-Si(OR⁵)(OR⁶)(OR⁷) (II)
und
iii) einer Mischung aus mindestens einem vollständig hydrolysierbaren Siliciumalkoxid der Formel (I) und mindestens einem Alkylalkoxid, das mindestens einen nicht hydrolysierbaren Substituenten hat, wobei der nicht hydrolysierbare Substituent ein substituiertes oder nicht substituiertes (C₁-C₄)-Alkyl der Formel (II) ist;
wobei:
jedes R¹, R², R³, R⁴, R⁵, R⁶ und R⁷ unabhängig voneinander ausgewählt ist aus der Gruppe bestehend aus einer substituierten oder nicht substituierten (C₁-C₁₄)-Alkyl-, (C₅-C₆)-Aryl-, (C₂-C₁₄)-Alkenyl- und (C₂-C₁₄)-Alkynylgruppe; und
R⁸ ein substituiertes oder nicht substituiertes (C₁-C₄)-Alkyl ist.

7. Das Verfahren nach einem der Ansprüche 1-6, wobei der mindestens eine Epoxidringöffnungskatalysator 1-Methylimidazol (1-MI) ist.

8. Das Verfahren nach einem der Ansprüche 1-7, wobei das hydrolysierbare Metallalkoxid eine Verbindung der Formel (IV) ist:
(OR¹³)(OR¹⁴)(OR¹⁵)(OR¹⁶)Metall (IV)
wobei jedes R¹³, R¹⁴, R¹⁵ und R¹⁶ unabhängig voneinander aus der Gruppe bestehend aus substituierter oder nicht substituierter (C₁-C₁₄)-Alkyl, (C₅-C₆)-Aryl, (C₂-C₁₄)-Alkenyl und (C₂-C₁₄)-Alkynylgruppe ausgewählt ist und das Metallatom wie in Anspruch 1 definiert ist.

9. Das Verfahren nach einem der Ansprüche 1-8, wobei der Komplexbildner ausgewählt aus der Gruppe bestehend aus Acetylaceton, Methacrylsäure, Essigsäure, Isobuttersäure, Bipydirin und Mischungen davon ist.

10. Eine Sol-Gel-Beschichtungszusammensetzung, die durch das Verfahren wie in einem der Ansprüche 1-9 definiert erhalten werden kann.

11. Ein Verfahren zur Herstellung von einem beschichteten Substrat umfassend:
d) das Auftragen der Sol-Gel-Beschichtungszusammensetzung wie in Anspruch 10 auf dem Substrat; und
e) das Härten der im Schritt d) erhaltenen Beschichtung.

12. Das Verfahren nach Anspruch 11, wobei der Schritt d) durch das Eintauchen des Substrats in die Beschichtungszusammensetzung bei einer Auftragsrate von 2 cm/min bis 40 cm/min durchgeführt wird.

13. Das Verfahren nach einem der Ansprüche 11-12, wobei der Schritt e) durchgeführt wird, in dem das im Schritt d) erhaltene beschichtete Substrat einer Temperatur von 80°C bis 220°C während eines geeigneten Zeitraums ausgesetzt wird.

14. Ein beschichtetes Substrat, das mittels des Verfahrens wie in einem der Ansprüche 11-13 definiert erhalten werden kann.

15. Das beschichtete Substrat nach Anspruch 14, wobei die Beschichtung ein einschichtiges beschichtetes Substrat ist, das folgendes hat: ein Spektrum von Fourier-Transform-Infrarotspektrometrie (FTIR) mit Peaks bei 3370, 2964, 2935, 2875, 2361, 2342, 1890, 1726, 1610, 1511, 1460, 1411, 1383, 1363, 1266, 1082, 835, 791, 670, 566, 451 ± 4 cm⁻¹; und ein Spektrum von Röntgenphotoelektronenspektroskopie (XPS), welches charakteristische Peaks bei 183,0, 102,8, 532,6, 531,0, 284,8, 286,6 und 288,7 ± 0,15 eV umfasst; wobei die Spektren mittels des in der Beschreibung ausführlich aufgeführten einschlägigen Verfahrens erfasst wurden; welches mittels des Verfahrens nach einem der Ansprüche 11-13 gewonnen werden kann, wobei das hydrolysierbare Silicium-Alkoxid Tetraethylorthosilicat (TEOS) ist und wobei das Organosiliciumalkoxid, das mindestens einen an das Siliciumatom gebundenen nicht hydrolysierbaren Substituenten hat, wobei der nicht hydrolysierbare Substituent verschieden von einem substituierten oder nicht substituierten (C₁-C₄)-Alkyl ist, Glycidoxypropyltrimethoxysilan (GPTMS) ist; wobei der organische Präkursor Bisphenol A (BPA) ist; wobei das Metall-Alkoxid Zirconium(IV) n-Propoxid ist und der Komplexbildner Acetylaceton ist; und wobei der Härtungsschritt d) bei 120°C während 8 Stunden durchgeführt wird.

## Revendications

1. Un procédé de préparation d'une composition de revêtement sol-gel comprenant :
a) fournir un premier sol qui peut être obtenu moyennant un procédé qui comprend :
a1) premièrement mélanger au moins un alcoxyde de silicium hydrolysable et au moins un alcoxyde d'organosilicium ayant au moins un substituant non hydrolysable lié à l'atome de silicium, le substituant non hydrolysable étant différent d'un alkyle en (C₁-C₄) substitué ou non substitué avec un ou plusieurs alcools en C₁-C₈ ;
a2) préparer un second mélange en mélangeant une solution aqueuse d'au moins un catalyseur acide ayant un pH inférieur à 5, au moins un précurseur organique, un ou
plusieurs alcools C₁-C₈ et, facultativement, au moins un catalyseur d'ouverture de cycle époxy ;
a3) ajouter le second mélange obtenu dans l'étape a2) au mélange résultant de l'étape a1) ; et agiter le mélange résultant à une température allant de 35°C à 45°C pendant une période de temps appropriée afin d'obtenir le premier sol ;
b) fournir un second sol qui peut être obtenu moyennant un procédé qui comprend :
b1) premièrement, mélanger au moins un alcoxyde de métal hydrolysable avec un ou plusieurs alcools C₁-C₈ sous une atmosphère inerte et sèche ;
b2) ajouter un agent complexant au mélange résultant obtenu dans l'étape b1) ; et ajouter le mélange résultant pendant une période de temps approprié ;
b3) ajouter une solution aqueuse d'au moins un catalyseur acide ayant un pH inférieur à 7 au mélange résultant obtenu dans l'étape a2) et agiter le mélange résultant à une température comprise de 15 °C à 30 °C pendant une période de temps appropriée afin d'obtenir le second sol ;
dans lequel l'atome de métal dans l'alcoxyde de métal hydrolysable est choisi dans le groupe constitué de Ti, Zr, Al, B, Sn et V ; et
c) mélanger le premier sol avec le second sol, et laisser mûrir le mélange résultant en agitant à une température allant de 15 °C à 30 °C pendant une période de temps comprise de 24h à 72h ;
dans lequel l'alcoxyde d'organosilicium ayant au moins un substituant non hydrolysable lié à l'atome de silicium, le substituant non hydrolysable étant différent d'un alkyle en (C₁-C₄) substitué ou non substitué, est un composé de formule (III)
R⁹-(CH₂)ₘ-Si(OR¹⁰)(OR¹¹)(OR¹²) (III)
dans laquelle :
un substituant non hydrolysable lié á l'atome de silicium veut dire ici un radical alkyle époxyde lié à l'atome de silicium moyennant une liaison Si-C qui n'est pas hydrolysable dans cette position, et dans lequel dans le composé de formule (III) ledit substituant est R⁹(CH₂)m- ;
et
chacun de R¹⁰, R¹¹ et R¹² sont indépendamment choisis dans le groupe constitué de : un alkyle en (C₁-C₁₄) substitué ou non substitué, un aryle en (C₅-C₆), un alkényle en (C₂-C₁₄) et un alkyle-CH=CH- en (C₂-C₁₄) ; m est un nombre entier allant de 0 à 20 ; et R⁹ est un composé de formule (V) 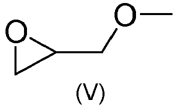
et le précurseur organique est choisi dans le groupe constitué de :
un composé de bisphénol de formule (VI) 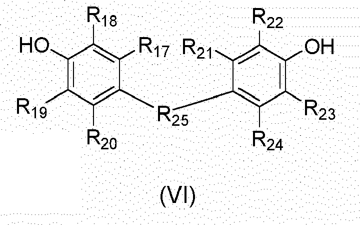 dans laquelle :
R₁₇, R₁₈, R₁₉, R₂₀, R₂₁, R₂₂, R₂₃ et R₂₄ sont indépendamment choisis dans le groupe constitué de H, alkyle en (C₁-C₆) substitué ou non substitué, aryle en (C₅-C₆), alkényle en (C₂-C₁₄) et alkyle-CH=CH- en (C₂-C₁₄) et phényle substitué ou non substitué ;
R₂₅ est choisi dans le groupe constitué de CR₂₆R₂₇, SO₂, un composé de formule (VII) 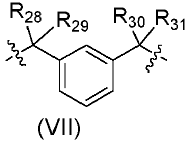 et un composé de formule (VIII) 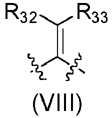
R₂₆ et R₂₇ sont indépendamment choisis dans le groupe constitué de H, alkyle en (C₁-C₆) substitué ou non substitué, aryle en (C₅-C₆), alkényle en (C₂-C₁₄) et alkyle-CH=CH- en (C₂-C₁₄), et phényle substitué ou non substitué ;
R₂₈, R₂₉, R₃₀ et R₃₁ sont indépendamment choisis dans le groupe constitué de H, et alkyle en (C₁-C₆) substitué ou non substitué, aryle en (C₅-C₆), alkényle en (C₂-C₁₄) et alkyle-CH=CH- en (C₂-C₁₄) ; et
R₃₂ et R₃₃ sont indépendamment choisis dans le groupe constitué d'halogène et alkyle en (C₁-C₆) substitué ou non substitué, aryle en (C₅-C₆), alkényle en (C₂-C₁₄) et alkyle-CH=CH- en (C₂-C₁₄);
un phénol substitué de formule (IX) 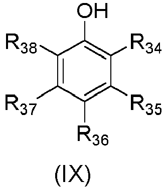
dans laquelle : R₃₄, R₃₅, R₃₆, R₃₇ et R₃₈ sont indépendamment choisis dans le groupe constitué d'un H, alkyle en (C₁-C₁₄) substitué ou non substitué, aryle en (C₅-C₆), alkényle en (C₂-C₁₄) et alkyle-CH=CH en (C₂-C₁₄), étant au moins un parmi R₃₄, R₃₅, R₃₆, R₃₇ et R₃₈ différent de H ;
un composé de formule (X) 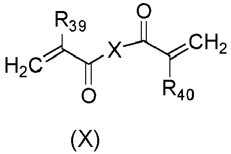 dans laquelle :
R₃₉ et R₄₀ sont indépendamment choisis dans le groupe constitué de H et alkyle en (C₁-C₆) ; et
X est choisi dans le groupe constitué d'un composé de formule (XI) 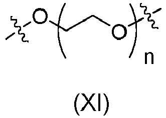
où n est un nombre entier de 1 à 6 ;
et un composé de formule (XII) ; 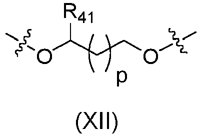
dans laquelle : R₄₁ est choisi dans le groupe constitué de H et alkyle en (C₁-C₆) et p est un nombre entier allant de 1 à 8 ;
et des mélanges de ceux-ci.

2. Le procédé selon la revendication 1, dans lequel le précurseur organique est choisi dans le groupe constitué d'un composé de bisphénol de formule (VI), un phénol substitué de formule (IX) et des mélanges de ceux-ci.

3. Le procédé selon l'une quelconque des revendications 1-2, effectuant, premièrement, les étapes a1)-a3) pour préparer le premier sol et, deuxièmement, les étapes b1)-b3) pour préparer le second sol ; et, subséquemment, l'étape c).

4. Le procédé selon l'une quelconque des revendications 1-3, dans lequel le catalyseur acide est un acide inorganique indépendamment choisi dans le groupe constitué de H₂SO₄, HCI, HNO₃ et des mélanges de ceux-ci ; et l'alcool en (C₁-C₈) est indépendamment choisi dans le groupe constitué d'éthanol, butanol, propanol et des mélanges de ceux-ci.

5. Le procédé selon l'une quelconque des revendications 1-4, dans lequel l'alcoxyde de silicium hydrolysable est choisi dans le groupe constitué de :
i) un alcoxyde de silicium entièrement hydrolysable de formule (I) ;
Si(OR¹)(OR²)(OR³)(OR⁴) (I)
ii) un alkylalcoxyde ayant au moins un substituant non hydrolysable, le substituant non hydrolysable étant un alkyle en (C₁-C₄) substitué ou non substitué de formule (II):
R⁸-Si(OR⁵)(OR⁶)(OR⁷) (II)
iii) un alkénylalcoxyde ayant au moins un substituant non hydrolysable, le substituant non hydrolysable étant un alkyle en (C₁-C₄) substitué ou non substitué de formule (II):
R^{X}-Si(OR⁵)(OR⁶)(OR⁷) (II')
iv) un mélange d'au moins un alcoxyde de silicium entièrement hydrolysable de formule (I) et au moins un alkylalcoxyde ayant au moins un substituant non hydrolysable, le substituant non hydrolysable étant un alkyle en (C₁-C₄) substitué ou non substitué de formule (II) ;
et
v) un mélange d'au moins un alcoxyde de silicium entièrement hydrolysable de formule (I) et au moins un alkénylalcoxyde ayant au moins un substituant non hydrolysable, le substituant non hydrolysable étant un alkyle en (C₁-C₄) substitué ou non substitué de formule (II') ;
dans laquelle :
chacun parmi R¹, R², R³, R⁴, R⁵, R⁶ et R⁷ est indépendamment choisi dans le groupe constitué d'un groupe alkyle en (C₁-C₁₄) substitué ou non substitué, aryle en (C₅-C₆), alkényle en (C₂-C₁₄) et alkynyle en (C₂-C₁₄) ; et
R⁸ est un alkyle en (C₁-C₄) substitué ou non substitué ; et
R^{x} est un alkyle en (C₂-C₁₄) substitué ou non substitué.

6. Le procédé selon l'une quelconque des revendications 1-5, dans lequel l'alcoxyde de silicium hydrolysable est choisi dans le groupe constitué de :
i) un alcoxyde de silicium entièrement hydrolysable de formule (I) ;
Si(OR¹)(OR²)(OR³)(OR⁴) (I)
ii) un alkylalcoxyde ayant au moins un substituant non hydrolysable, le substituant non hydrolysable étant un alkyle en (C₁-C₄) substitué ou non substitué de formule (II):
R⁸-Si(OR⁵)(OR⁶)(OR⁷) (II)
et
iii) un mélange d'au moins un alcoxyde de silicium entièrement hydrolysable de formule (I) et au moins un alkylalcoxyde ayant au moins un substituant non hydrolysable, le substituant non hydrolysable étant un alkyle en (C₁-C₄) substitué ou non substitué de formule (II) ;
dans laquelle :
chacun parmi R¹, R², R³, R⁴, R⁵, R⁶ et R⁷ est indépendamment choisi dans le groupe constitué d'un groupe alkyle en (C₁-C₁₄) substitué ou non substitué, aryle en (C₅-C₆), alkényle en (C₂-C₁₄) et alkynyle en (C₂-C₁₄) ; et
R⁸ est un alkyle en (C₁-C₄) substitué ou non substitué.

7. Le procédé selon l'une quelconque des revendications 1-6, dans lequel l'au moins un catalyseur d'ouverture de cycle époxy est le 1-méthylimidazole (1-MI).

8. Le procédé selon l'une quelconque des revendications 1-7, dans lequel l'alcoxyde de métal hydrolysable est un composé de formule (IV) :
(OR¹³)(OR¹⁴)(OR¹⁵)(OR¹⁶)métal (IV)
dans laquelle chacun parmi R¹³, R¹⁴, R¹⁵ et R¹⁶ est indépendamment choisi dans le groupe constitué de groupe alkyle en (C₁-C₁₄) substitué ou non substitué, aryle en (C₅-C₆), alkényle en (C₂-C₁₄) et alkynyle en (C₂-C₁₄) et l'atome de métal est tel que défini dans la revendication 1.

9. Le procédé selon l'une quelconque des revendications 1-8, dans lequel l'agent complexant est choisi dans le groupe constitué d'acétylacétone, acide méthacrylique, acide acétique, acide isobutyrique, bipyridine et des mélanges de ceux-ci.

10. Une composition de revêtement de sol-gel qui peut être obtenue par le procédé tel que défini dans l'une quelconque des revendications 1-9.

11. Un procédé de préparation d'un substrat revêtu comprenant :
d) déposer la composition de revêtement de sol-gel telle que définie dans la revendication 10 sur le substrat ; et
e) curer le revêtement obtenu dans l'étape d).

12. Le procédé selon la revendication 11, dans lequel l'étape d) est effectuée en trempant le substrat dans la composition de revêtement à une vitesse de déposition allant de 2 cm/min à 40 cm/min.

13. Le procédé selon l'une quelconque des revendications 11-12, dans lequel l'étape e) est effectuée en soumettant le substrat revêtu obtenu dans l'étape d) à une température allant de 80 °C à 220 °C pendant une période de temps appropriée.

14. Un substrat revêtu qui peut être obtenu par le procédé tel que défini dans l'une quelconque des revendications 11-13.

15. Le substrat revêtu selon la revendication 14, dans lequel le revêtement est un substrat revêtu monocouche ayant ; un spectre de spectroscopie infrarouge à transformée de Fourier (FTIR) ayant des pics à 3370, 2964, 2935, 2875, 2361, 2342, 1890, 1726, 1610, 1511, 1460, 1411, 1383, 1363, 1266, 1082, 835, 791, 670, 566, 451 ± 4 cm⁻¹ ; et un spectre de spectrométrie de photoélectrons induits par rayons X (XPS) qui comprend des pics caractéristiques à 183,0, 102,8, 532,6, 531,0, 284,8, 286,6 et 288,7 ± 0,15 eV ; dans lequel les spectres ont été enregistrés selon le procédé relevant détaillé dans la description ; qui peut être obtenu moyennant le procédé selon l'une quelconque des revendications 11-13 dans lequel l'alcoxyde de silicium hydrolysable est le tétraéthylorthosilicate (TEOS) et l'alcoxyde d'organosilicium ayant au moins un substituant non hydrolysable lié à l'atome de silicium, le substituant non hydrolysable étant différent d'un alkyle en (C₁-C₄) substitué ou non substitué, est le glycidoxypropyltriméthoxysilane (GPTMS) ; le précurseur organique est le bisphénol A (BPA) ; l'alcoxyde de métal est le n-propoxyde de zirconium(IV) et l'agent complexant est l'acétylacétone ; et l'étape de mûrissement d) est effectuée à 120 °C pendant 8 heures.
